# EUROPÄISCHE PATENTSCHRIFT

(11) **EP 2 188 165 B1**
(45) Veröffentlichungstag und Bekanntmachung des Hinweises auf die Patenterteilung: **16.11.2011**
(21) Anmeldenummer: 08804010.0
(22) Anmeldetag: 11.09.2008
(51) Int. Cl.: B61G 7/10, B61G 11/16, E02B 3/26

(54) **STOßSICHERUNG**
SHOCK ABSORBER
AMORTISSEUR

(30) Priorität: 11.09.2007 EP 07116138
(43) Veröffentlichungstag der Anmeldung: 26.05.2010
(73) Patentinhaber: Voith Patent GmbH, 89522 Heidenheim (DE)
(72) Erfinder: GANSWEIDT, Michael, 38124 Braunschweig (DE)
(74) Vertreter: Rupprecht, Kay
(86) Internationale Anmeldenummer: PCT/EP2008/062043
(87) Internationale Veröffentlichungsnummer: WO 2009/034123

(56) Entgegenhaltungen:
- EP-A- 1 247 716
- WO-A-2005/102810
- DE-A1- 1 530 223
- FR-A- 2 789 358

## Beschreibung

Die vorliegende Erfindung betrifft eine Stoßsicherung insbesondere für die Verwendung als zusätzliche irreversible Stoßsicherungsstufe zusammen mit einem Bauteil zur Kraftübertragung. Eine Stoßsicherung mit den im Oberbegriff von Anspruch 1 definierten Merkmalen ist aus der DE-A- 1 530 223 bekannt.

Es ist bekannt, zum Schutz vor Beschädigungen an der Außenhaut eines Schiffes bei Hafenmanövern sowie beim Liegen an einer Kaimauer sogenannte Fender einzusetzen. Üblicherweise wird dabei der als Schutzkörper fungierende Fender so zwischen dem Schiff und der Kaimauer positioniert, dass er einerseits als Stoßdämpfer und andererseits als Abstandshalter dient, damit der Schiffsrumpf nicht scheuert. Für größere Schiffe werden in der Regel eigenständig gegründete Fender verwendet, die Bestandteil einer Kaianlage sind. Derartige als Bestandteil einer Kaianlage ausgeführte Fender können bis zu einem gewissen Grad elastisch ausgeführt sein, damit diese bis zu einem gewissen Maß auch die Schiffsbewegungen beim Anlegen und bei Wellengang mitmachen können.

Bei Überschreiten des elastischen Dämpfungsvermögens der zum Einsatz kommenden Fender besteht allerdings die Gefahr der Beschädigung der Außenhaut des Schiffes, da die beispielsweise bei einem ungebremsten Anstoßen des Schiffes an eine Kaimauer auftretende Stoßenergie ungedämpft auf die Außenhaut des Schiffes wirkt. Um bei diesem Szenario eine Beschädigung der Außenhaut des Schiffes zu vermeiden, ist es denkbar, eine irreversibel ausgeführte Stoßsicherung vorzusehen, die beim Überschreiten des Dämpfungsvermögens der zum Einsatz kommenden Fender anspricht und dann zumindest einen Teil der auftretenden Stoßenergie absorbiert bzw. in Verformungsarbeit und wärme umwandelt.

Allgemein ist das Abdampfen von Stoßkräften und der wirksame Verzerr von bei einem Aufprall entstehender Stoßenergie insbesondere bei einem sich bewegenden Objekt ein Problem, wenn aufgrund der Masse des Objekts hohe Bewegungsenergien zu berücksichtigen sind, die nach einem vorhersehbaren Ereignisablauf in definierter Weise zu absorbieren sind.

Dies betrifft nicht nur Schiffe, wie etwa Öltanker, für die als Bestandteil einer Kaianlage eine Stoßsicherung vorzusehen ist, sondern auch Schienenfahrzeuge. Aus der Bahntechnik sind beispielsweise Prellböcke bekannt, die dem Abschluss eines Gleises bzw. Stumpfgleises einer Eisenbahnstrecke dienen und verhindern sollen, dass ein Schienenfahrzeug oder ein Waggon über das Schienenende hinaus rollen kann. Prellböcke sind meist so beschatten, dass möglichst viel Energie des sich bewegenden Schienenfahrzeuges aufgenommen werden kann, damit das Schienenfahrzeug nach Möglichkeit unbeschädigt bleibt. Der Prellbock kann dabei unter Umständen verformt oder zerstört werden.

Stoßsicherungen kommen aber auch in Gestalt von Stoßfängern zum Einsatz. Hierbei handelt es sich um Bauelemente an Fahrzeugen, die im Falle eines Zusammenstoßes oder eines Aufpralls auf ein festes Hindernis Energie aufnehmen und dadurch Beschädigungen am Fahrzeug oder der Ladung verhindern sollen. Stoßfänger kommen vor allem an Schienenfahrzeugen (auch als "Puffer", "Butter" oder "Stoßballen" bezeichnet) vor, wobei meistens ein oder zwei an den Stirnseiten angebrachte Konstruktionsteite eingesetzt werden, die den Zweck haben, die auf das Schienenfahrzeug in dessen Längsrichtung von außen her einwirkenden waagrechten Druckkräfte aufzunehmen. Dem Prinzip nach können bei Schienenfahrzeugen als Stoßsicherung zwei Arten von Stoßfängern zum Einsatz kommen, nämlich sogenannte "Einpuffer" oder "Zentralpuffer", bei denen die Stoßsicherung in der Längsachse des Fahrzeuges angebracht ist, so dass sich an jeder Stirnseite des Schienenfahrzeuges nur ein Puffer in der Mitte der Kopfschwelle befindet, oder sogenannte "Zweipuffer" oder "Seitenpuffer", bei welchen sich zwei Puffer an der Stirnseite des Schienenfahrzeuges befinden.

Demnach ist es aus dem Gebiet der Schienenfahrzeugtechnik bekannt, beispielsweise bei einem mehrgliedrigen Schienenfahrzeug die einzelnen Wagenkästen mit sogenannten Seitenpuffern oder UIC-Puffern auszurüsten, wenn die Wagenkästen nicht über ein Drehgestell miteinander verbunden sind und somit im Fahrbetrieb der Abstand zweier miteinander gekuppelter Wagenkästen variieren kann. Diese Seitenpuffer dienen dazu, die im normalen Fahrbetrieb beispielsweise beim Abbremsen oder Anfahren auftretenden Stöße aufzunehmen und abzudämpfen.

Für einen bei einem Schienenfahrzeug verwendeten Seitenpuffer kann ein teleskopartiger Aufbau zum Einsatz kommen, der ein Puffergehäuse, ein darin aufgenommenes Kraftübertragungsglied sowie ein Dämpfungselement beispielsweise in Gestalt einer Feder oder eines Elastomerkörpers aufweist. Bei einem derartigen Aufbau dient das Puffergehäuse als Längsführung und zur Abstützung von Querkräften, während das in dem Puffergehäusie aufgenommene Dämpfungselement zur Kraftübertragung in Längsrichtung dient.

Die Baulänge sowie der Pufferhub, d.h. der Federweg des Dämpfungselements, ist für bestimmte Fahrzeugkategorien in europäischen Richtlinien (beispielsweise UIC-Merkblätter 526, 528) standardisiert. Der Pufferhub eines standardisierten UIC-Puffers liegt beispielsweise in einem Bereich von 100 bis 110 mm. Nach Erreichen des maximalen Pufferhubes ist die Dämpfungseigenschaft des Seitenpuffers ausgeschöpft, infolgedessen die über die charakteristische Betriebslast des Seitenpuffers hinausgehenden Stoßkräfte ungedämpft in das Fahrzeuguntergestell weitergeleitet werden.

Dadurch werden zwar die Stoßkräfte, die während des normalen Fahrbetriebes beispielsweise bei einem mehrgliedrigen Fahrzeug zwischen den einzelnen Wagenkästen auftreten, über das in dem Seitenpuffer integrierte, in der Regel regenerativ ausgebildete Dämpfungselement absorbiert; bei Überschreiten der Betriebslast des Seitenpuffers hingegen, etwa beim Aufprall des Fahrzeuges auf ein Hindernis oder beim abrupten Abbremsen des Fahrzeuges, reicht üblicherweise das in dem Seitenpuffer integrierte Dämpfungselement nicht für einen Verzehr der insgesamt anfallenden Energie aus. Dadurch ist die von dem Seitenpuffer bereitgestellte Stoßdämpfung nicht mehr in das Energieverzehrkonzept des Gesamtfahrzeuges eingebunden, so dass die anfallende Stoßenergie direkt auf das Fahrzeuguntergestell übertragen wird. Dabei wird dieses extremen Belastungen ausgesetzt und unter Umständen beschädigt oder gar zerstört.

Mit dem Ziel, derartige Schäden zu vermeiden, ist es aus der Schienenfahrzeugtechnik bereits bekannt, die Führungsteile des Hülsenpuffers so auszubilden, dass nach Ausschöpfung des maximalen Pufferhubs, d.h. nach dem Auftreffen der Führungsteile des Seitenpuffers (Pufferhülse und Pufferstößel) auf definierte Anschläge, unter kontrollierter Deformation eine zusätzliche Verkürzungsmöglichkeit vorhanden ist.

In der Druckschrift WO 2005/11 58 18 A1 beispielsweise ist ein Hülsenpuffer beschrieben, bei welchem nach Ausschöpfung der Energieaufnahme des regenerativ ausgebildeten Dämpfungselements Sollbruchverbindungen reißen, um damit die Verkürzungslänge des Puffers zu vergrößern. Diese vergrößerte Verkürzungslänge erlaubt die plastische Deformation des Puffergehäuses bei Überlast, so dass bei dieser Lösung in destruktiver Weise die Stoßenergie in Verformungsarbeit und Wärme umgewandelt werden kann. Mit der bei Überlast auftretenden Deformation des Puffergehäuses ist somit - zusätzlich zu der von dem Seitenpuffer bereitgestellten Stoßdämpfung - eine Stoßsicherung bereitgestellt. Auch wenn der aus diesem Stand der Technik bekannte Seitenpuffer bis zu einem gewissen Grad das Fahrzeuguntergestell gegen Beschädigungen bei starken Auffahrstößen schützen kann, ist es hierbei nicht möglich, diese zusätzliche Stoßsicherung an bestimmte Anwendungen genau anzupassen. Hierzu wäre es erforderlich, die Kraft-Weg-Kennlinie bei der Deformation des Puffergehäuses entsprechend auszulegen, um einen vorhersehbaren, definierten Energieverzehr zu ermöglichen. Insbesondere ist die bekannte Lösung für viele Anwendungen nicht geeignet, da die über die Deformation des Puffergehäuses erzielbare maximale Energieaufnahme oftmals zu gering ist.

Ein weiterer Nachteil ist darin zu sehen, dass nach Ansprechen der zusätzlichen Stoßsicherung der gesamte Seitenpuffer ausgetauscht werden muss, da die Stoßsicherung in dem Seitenpuffer integriert ist und durch eine Deformation des Puffergehäuses der Seitenpuffer nicht mehr für den normalen Fahrbetrieb einsetzbar ist.

Die vorstehend geschilderte Problematik trifft nicht nur für Stoßsicherungen zu, die in Gestalt eines Stoßfängers, d.h. in Gestalt eines an der Stirnseite eines Schienenfahrzeuges angebrachten Bauelements ausgebildet sind. Vielmehr gelten die zuvor unter Bezugnahme auf Seitenpuffer beispielhaft beschriebenen Nachteilen im übertragenen Sinne auch für Stoßsicherungen, welche beispielsweise Bestandteil eines Prellbockes oder Bestandteil einer Kaianlage sind.

Auf der Grundlage der geschilderten Problemstellung liegt somit der Erfindung die Aufgabe zugrunde, eine Stoßsicherung anzugeben, mit welcher einerseits hohe Stoßenergien zuverlässig abgebaut werden können, und mit welcher andererseits die Kraft-Weg-Kennlinie der Stoßsicherung an einzelne Anwendungen möglichst genau angepasst werden kann.

Zusätzlich soll die Stoßsicherung für das Nachrüsten beispielsweise einer Stirnseite eines Wagenkastens, einer Stirnseite eines Prellbockes oder einer Kaianlage geeignet sein, wenn bei diesen Anwendungen bisher noch keine destruktiv ausgeführte Stoßsicherung vorgesehen ist.

Die der Erfindung zugrunde liegende Aufgabe wird mit einer Stoßsicherung nach Anspruch 1 gelöst.

In einer möglichen Realisierung der Stoßsicherung kann diese ferner einen mit der Grundplatte verbundenen Tragrahmen aufweisen, wobei das Verformungsrohr in dem Tragrahmen aufgenommen und das Verbindungselement ausgelegt ist zum Verbinden des Kraftübertragungselements mit dem Tragrahmen einerseits und mit dem Verformungrohr andererseits, und wobei das Verbindungselement vorzugsweise lösbar mit dem Tragrahmen verbunden ist und in seinem mit dem Tragrahmen verbundenen Zustand gegen das Spannelement drückt, so dass das Verformungsrohr zwischen dem Spannelement und der Grundplatte spielfrei verspannt ist.

An dieser Stelle sei angemerkt, dass die Erfindung nicht nur darin zu sehen ist, dass eine zusätzliche Stoßsicherung für die Verwendung mit einem Seitenpuffer angegeben wird. Vielmehr ist die Stoßsicherung allgemein für jedwede Stirnfläche einer Tragstruktur geeignet, wie beispielsweise für die Stirn- oder Kontaktläche einer Kaianlage, eines Prellbocks oder eines Fahrzeugbauteils, welches zur Kraftübertragung der im Fahrbetrieb auftretenden Kräfte dient. Insbesondere kann es sich bei dem Fahrzeugbauteil auch um einen beispielsweise vor der Stirnseite des Wagenkastens verlaufenden Querträger (Crossbeam) handeln, der beispielsweise - wie in der Druckschrift DE 10 126 483 A1 beschrieben - als Stoßbügel ausgeführt und über seitliche Energieverzehrelemente und einen Grundträger an der Stirnseite eines Schienenfahrzeuges befestigt ist. Dieser Stoßbügel kann beispielsweise in der horizontalen Kupplungsebene angeordnet sein und dazu dienen, die Stirnseite des Wagenkastens vor durch Stöße bewirkte Beschädigungen zu schützen.

Als "Bauteil zur Kraftübertragung" im Sinne der vorliegenden Erfindung ist somit auch eine quer vor der Stirnseite eines Wagenkastens verlaufende Tragstruktur denkbar, welche über seitliche Energieverzehrelemente mit der Stirnseite des Wagenkastens verbunden ist. Diese Tragstruktur kann ferner dazu dienen, an ihrer der Stirnseite des Wagenkastens gegenüberliegenden Seite eine Kupplungsanordnung, wie beispielsweise eine Mittepufferkupplung, zu tragen.

Bei der erfindungsgemäßen Lösung handelt es sich somit um eine Stoßsicherung, welche in Kombination mit einem Bauteil zur Kraftübertragung einsetzbar ist und dazu dient, in einem Crashfall durch eine definierte plastische Verformung des in dem Tragrahmen aufgenommenen Verformungsrohres die auftretende Stoßenergie in Verformungsarbeit und Wärme umzuwandeln. Durch die Verwendung des zwischen dem Spannelement und der Grundplatte spielfrei verspannten Verformungsrohres ist es möglich, die Ansprechkraft und den maximal verzehrbaren Energiebetrag der Stoßsicherung vorab festzulegen und an bestimmte Anwendungen speziell anzupassen. Demnach ist nicht nur das Ansprechverhalten, sondern auch der Ereignisablauf beim Energieverzehr vorab festlegbar.

Unter dem hierin verwendeten Begriff "spielfrei verspannt" ist gemeint, dass im normalen Fahrbetrieb das Spannelement relativ zur Grundplatte im Wesentlichen starr ist.

Die erfindungsgemäße Lösung zeichnet sich insbesondere dadurch aus, dass die Stoßsicherung einen Aufbau aufweist, der es ermöglicht, dass nach Ansprechen der Stoßsicherung lediglich das ggf. in einem Tragrahmen aufgenommene Verformungsrohr durch plastische Verformung deformiert wird. Nach einem Crashfall ist somit nur dieses Bauteil zu ersetzen. Hierzu ist in vorteilhafter Weise das Verbindungselement, weiches das Kraftübertragungsetement mit dem Tragrahmen einerseits und mit dem Verformungsrohr andererseits verbindet, lösbar mit dem Tragrahmen verbunden. In dem die (lösbare) Verbindung zwischen dem Verbindungselement und dem Tragrahmen gelöst wird, ist es möglich, das Verformungsrohr aus der Stoßsicherung herauszunehmen und bei Bedarf auszutauschen. Anschließend wird das Verbindungselcment wieder mit dem Verformungsrohr und/oder ggf. mit dem Tragrahmen verbunden, so dass dieses gegen das Spannelement drückt und das (beispielsweise ausgetauschte) Verformungsrohr zwischen dem Spannelement und der Grundplatte spielfrei verspannt ist.

Insbesondere zeichnet sich die erfindungsgemäße Lösung also dadurch aus, dass in einem Crashfall kein vollständiges Austauschen der zur Kraftübertragung verwendeten Bauteile erforderlich ist.

Das Kraftübertragungselement, weiches bei der Stoßsicherung gemäß der vorliegenden Erfindung zum Einsatz kommt, dient dabei als Schnittstelle zwischen dem Bauteil zur Kraftübertragung und der Stoßsicherung. Einzelheiten hinsichtlich des Kraftübertragungselements werden nachfolgend aufgeführt.

Vorzugsweise ist die Stoßsicherung ausgelegt, Stoßkräfte zu übertragen, wobei der bei einer Stoßkraftübertragung auftretende Krafttluss durch das Kraftübertragungselement, das Spannelement das Verformungsrohr und die Grundplatte läuft. Dabei sollte das Verformungsrohr derartig ausgelegt sein, bis zu einer vorab festlegbaren charakteristische Stoßkraft die bei der Stoßkraftübertragung anfallende Energie im Wesentlichen vollständig zu übertragen, Nach Überschreiten der vorab festlegbaren charakteristischen Stoßkraft sollte das Verformungsrohr unter gleichzeitiger plastischer Verformung zumindest einen Teil der bei der Stoßkraftübertragung anfallenden Energie absorbieren und abbauen, wobei sich bei der plastischen Verformung des Verformungsrohres das Kraftübertragungselement und die Grundplatte relativ aufeinander zu bewegen. Dadurch, dass der bei der Übertragung der Stoßkräfte in Längsrichtung der Stoßsicherung stattfindende Kraftfluss im wesentlichen vollständig unter anderem durch das Verformungsrohr hindurch läuft, kann erreicht werden, dass der Energieverzehr des Verformungsrohres, und insbesondere die für das Verformungsrohr charakteristische Ansprechkraft, vorab durch Auslegung des Verformungsrohres genau festlegbar ist.

Im Einzelnen wäre es denkbar, durch die Wanddicke des Verformungsrohres und/oder durch eine geeignete Materialwahl die Biegesteifigkeit des Verformungsrohres und somit die für das Verformungsrohr charakteristische Ansprechkraft vorab genau festzulegen. Selbstverständlich ist es aber auch denkbar, dass der bei der Übertragung von Stoßkräften in Längsrichtung der Stoßsicherung stattfindende Kraftfluss nur teilweise durch das Verformungsrohr hindurch läuft, wobei der restliche Teil des Kraftflusses mit Hilfe von geeigneten Einrichtungen an dem Verformungsrohr vorbeigeleitet wird, so dass dieser Teil direkt, d.h. unter Umgehung des Verformungsrohres, von dem Kraftübertragungselement zu der Grundplatte läuft.

In einer bevorzugten Realisierung der Stoßsicherung ist vorgesehen, dass das in der Stoßsicherung enthaltene Energieverzehrelement als Verformungsrohr ausgebildet ist, welches sich bei Überschreiten des durch den Kraftfluss durch die Stoßsicherung übertragenen, festlegbaren Energiebetrags vorzugsweise unter Querschnittserweiterung plastisch verformt und die Relativbewegung des Kraftübertragungselements relativ zur Grundplatte zulässt. Eine Stoßsicherung, in welcher als Energieverzehrelement ein Verformungsrohr verwendet wird, zeichnet sich dadurch aus, dass es eine definierte Ansprechkraft ohne Kraftspitzen aufweist. Aufgrund der im Wesentlichen rechteckig verlaufenden Kennlinie ist nach Ansprechen der Stoßsicherung somit eine maximale Energieaufnahme sichergestellt.

Besonders bevorzugt wird beim Ansprechen der Stoßsicherung das Verformungsrohr unter gleichzeitiger Querschnittserweiterung plastisch verformt. Selbstverständlich ist allerdings auch eine Energieaufnahme unter gleichzeitiger Querschnittsverringerung des Verformungsrohres denkbar; hierzu wäre es allerdings erforderlich, das Verformungsrohr durch eine beispielsweise in der Grundplatte der Stoßsicherung vorgesehene Düscnöffnung etc. zu drücken, so dass das plastisch verformte Energieverzehrelement aus der Stoßsicherung ausgestoßen wird. Bei einem Verformungsrohr, weiches sich beim Ansprechen der Stoßsicherung unter Querchnittserweiterung plastisch verformt, kann ein derartiges Ausstoßen des verformten Energieverzehrelements verhindert werden. Aus diesem Grund wird derzeit die Ausführungsform mit dem unter Querschnittserweiterung verformbaren Energieverzehrelement bevorzugt.

Bei der erfindungsgemäßen Lösung ist vorgesehen, dass das Verformungsrohr zwischen der Grundplatte und dem Spannelement spielfrei verspannt ist. Dadurch wird eine spielfreie Integration des Verformungsrohres in der Stoßsicherung sichergestellt, wobei durch eine geeignete Vorspannung auch das Ansprechverhalten des Verformungsrohres und somit der Stoßsicherung beeinflusst bzw. vorab festgelegt werden kann. Als Spannelement kommt beispielsweise eine an eine der Grundplatte zugewandte Anschlagfläche des Verbindungselements anstoßende Stufe in Frage. Denkbar hierbei wäre es, diese Stufe als integraler Bestandteil des Kraftübertragungselements auszubilden.

Alternativ hierzu kommt allerdings auch eine Lösung in Frage, bei weicher das Spannelement im Hinblick auf das Kraftübertragungsetement als separates Bauteil ausgeführt ist und beispielsweise einen in dem als Hohlkörper ausgeführten Kraftübertragungscleniefit zumindest teilweise aufgenommenen Spannelementkörper aufweist, wobei an diesem Spannelemcntkörper eine an eine der Grundplatte zugewandte Anschlagfläche des Verbindungselements anstoßende Stufe ausgebildet ist.

In einer bevorzugten Realisierung der erfindungsgemäßen Lösung ist das der Grundplatte gegenüberliegende Ende des Verformungsrohres in einer in dem Verbindungselement ausgebildeten Nut vorzugsweise formschlüssig aufgenommen. Das Verbindungselement ist dabei vorzugsweise über eine lösbare Schraubverbindung mit dem Tragrahmen verbunden und drückt somit gegen das Spannelement derart, dass das Verformungsrohr zwischen dem Spannelement und der Grundplatte spielfrei verspannt ist.

Das Verbindungselement dient nicht nur zum Verspannen des Verformungsrohres zwischen dem Spannelement und der Grundplatte, sondern übernimmt auch eine Langsführungsfunktion, wenn nach dem Ansprechen der Stoßsicherung das Verformungsrohr plastisch verformt wird und sich das Kraftübertragungselement auf die Grundplatte zu bewegt. Hierzu weist das Verbindungselement vorzugsweise eine Führungsfläche auf, welche an der Außenfläche des Kraftübertragungselements unmittelbar angrenzt bzw. anstößt und welche ausgelegt ist, nach Ansprechen der Stoßsicherung die durch ein plastisches Verformen des Vertormungsrohres bewirkte Bewegung des Kraftübertragungselements relativ zur Grundplatte in axialer Richtung der Stoßsicherung zu führen. Dadurch, dass dem Verbindungselement auch eine Führungsfunktion zukommt, kann ein Verkeilen oder ein Verkanten der einzelnen Bauteile der Stoßsicherung beim Energieverzehr vierhindert werden. Somit ist es möglich, insbesondere bei vertikaler oder schräger, also nicht vollständig axialer Belastung des Verformungsrohres ein "Fressen" bzw. Verkeilen zu verhindern, so dass grundsätzlich die Funktion eines destruktiven Energieverzehrs mit einem vorab festlegbaren Ereignisablauf sicher gegeben ist.

Wie bereits angedeutet kann, indem die Wandstärke und das Material des Verformungsrohres entsprechend gewählt werden, der bei einer Stoßkraftübertragung durch den Kraftfluss durch das Verformungsrohr übertragene, für das Ansprechen des Verformungsrohres bzw. der Stoßsicherung charakteristische Energiebetrag vorab eingestellt werden. In einer besonders bevorzugten Realisierung der ertindungsgemäßen Stoßsicherung ist vorgesehen, dass das Verformungsrohr mit seinem grundplattenseitigen Ende mit der Grundplatte stoff- und/oder formschlüssig verbunden ist. Denkbar hierbei wäre es beispielsweise, in der Grundplatte eine entsprechende Nut vorzusehen, in welcher das Verformungsrohr eingesetzt wird.

Andererseits sollte an dem gegenüberliegenden Ende des Verformungsrohres vorzugsweise ein Verformungsrohrabschnitt vorgesehen sein, der einen im Vergleich zu einem weiter in Richtung Grundplatte liegenden Verformungsrohrabschnitt aufgeweiteten Querschnitt hat. Bei dieser Ausführungsform sollte die Stoßsicherung ferner einen Kegelring aufweisen, der zwischen dem Spannelement und dem Verformungsrohr liegt, so dass das Verformungsrohr über den Kegelring zwischen dem Spannelement und der Grundplatte verspannt ist. Dieser Kegelring kann beispielsweise einstückig mit dem Spannelement ausgebildet sein. Denkbar hierbei ist es aber selbstverständlich auch, den Kegelring als im Hinblick- auf das Spannelement separates Bauteil auszuführen.

Grundsätzlich sollte der Kegelring mit seinem grundplattenseitigen Endabschnitt zumindest teilweise in den aufgeweiteten Abschnitt des Verformungsrohres hineinragen und an der Innenoberfläche des Verformungsrohres anliegen.

Die mit dieser Weiterentwicklung erzielbaren Vorteile liegen auf der Hand. Einerseits wird durch das Vorsehen eines Verformungsrohres, welches über den Kegelring zwischen der Grundplatte und dem Spannelement eingespannt ist, eine Stoßsicherung bereitgestellt, die einen maximalen Energieverzehr bei einem möglichst kleinen Einbauraum ermöglicht.

Durch die Verwendung eines Verformungsrohres, welches sich unter Querschnittserweiterung plastisch verformt, ist es insbesondere nicht erforderlich, einen rusätzlichen Raum hinter der Stoßsicherung vorzusehen, in weichen das plastische verformte Verformungsrohr nach Ansprechen der Stoßsicherung ausgestoßen wird. Andererseits ist mit dieser Ausführungsform durch das Vorsehen des Kegelringes zwischen dem Spannelement und dem Verformungsrohr ein vorab sehr genau festlegbarer Ereignisablauf beim Energieverzehr möglich.

Wie bereits erwähnt, sollte der Siegelring mit seinem grundplattenseitigen Endabschnitt zumindest teilweise in den Verformungsrohrabschnitt hineinragen, dessen Querschnitt vor Ansprechen der Stoßsicherung bereits einen im Vergleich zu einem weiter in Richtung Grundplatte liegenden Verformungsrohrabschnitt aufgeweiteten Querschnitt aufweist. Da einerseits der Kegelring zumindest teilweise in den aufgeweiteten Verformungrohrabschnitt hineinragt und andererseits der in den aufgeweiteten Verformungsrohrabschnitt hineinragende Teil des Kegelringes an der Innenoberfläche dieses Rohrabschnittes anliegt, läuft beim Ansprechen der Stoßsicherung, also wenn sich das Kraftübertragungselement mit dem Spannelement relativ zu der Grundplatte und dem mit der Grundplatte Stoff- und/oder formschlüssig verbundenen Verformungsrohr in Richtung Grundplatte bewegt, das grundplattenseitige Ende des Kegelringes an der Innenoberfläche des (noch) nicht aufgeweiteten Verformungsrohrabschnittes entlang und bewirkt somit eine axiale Führung beim Energieverzehr. Zusätzlich zu der mit der Führungsfläche des Verbindungselements bewirkten Führung verhindert diese mit dem Kegelring bewirkte axiale Führung ein Verkanten des Spannelementes bzw. des Kegelringes beim Ansprechen der Stoßsicherung in dem Verformungsrohr, so dass die plastische Verformung des Verformungsrohres (d.h. die plastische Querschnittsaufweitung des Verformungsrohres) in einer genau vorhersehbaren Weise abläuft und der Ereignisablauf des Energieverzehrs im Crashfall insgesamt genau vorhersehbar ist.

Bei der zuletzt genannten Ausführungsform ist es denkbar, dass der Kegelring und das Spannelement einstückig ausgebildet sind. Selbstverständlich ist es aber auch denkbar, dass der Kegelring mit dem Spannelement, und im einzelnen mit der am Spannelement ausgebildeten Stufe, die an die der Grundplatte zugewandte Anschlagtläche des Verbindungselements anstößt, über einen formschlüssigen Eingriff oder über eine kraftschlüssige Verbindung verbunden ist.

In einer besonders Bevorzugten Realisierung der erfindungsgemäßen Stoßsicherung ist vorgesehen, dass das Kraftübertragungselement an seiner der Grundplatte gegenüberliegenden Seite eine Stoßplatte aufweist, über welche Stoßkräfte in das Kraftübertragungselement und somit in die Stoßsicherung einleitbar sind. Denkbar hierbei wäre es, dass die Stoßplatte direkt mit dem Kraftübertragungselement verbunden ist, so dass Stoßkräfte direkt von der Stoßplatte über das Kraftübertragungselement in die Stoßsicherung eingeleitet werden. Diese Ausführungsform zeichnet sich gurch aus, dass die Stoßsicherung ausgelegt ist, nicht nur Stoßkräfte, sondern auch Zugkräfte zu übertragen. Bei einer Zugkraftübertragung über die Stoßsicherung läuft der dabei auftretende Kraftfluss durch die Stoßplatte, das Kraftübertragungselement, das Spannelement, das Verbindungselement und den Tragrahmen.

In einer anderen bevorzugten Realisierung der Stoßsicherung ist vorgesehen, dass diese ferner eine in der Stoßsicherung integrierte Puffervorrichtung aufweist. Diese Puffervorrichtung umfasst vorzugsweise einen in dem zumindest teilweise als Hohlkörper ausgeführten Kraftübertragungselement geführten Pufferstempel mit einer Stoßplatte, welche an dem der Grundplatte gegenüberliegenden Ende der Stoßsicherung vorgesehen ist und über welche über die Puffervorrichtung Stoßkräfte in das Kraftübertragungselement und in die Stoßsicherung einleitbar sind. Darüber hinaus sollte die bei dieser Ausführungform in der Stol3sicherung integrierte Puffervorrichtung ein im Inneren des Kraftübertragungselements aufgenommenes, vorzugsweise regenerativ ausgebildetes Energieverzehrelement aufweisen.

Bei dieser bevorzugten Ausführungsform kommt die Stoßsicherung somit in Kombination mit einer beispielsweise üblicherweise als Seitenpuffer verwendeten Puffervorrichtung zum Einsatz. Diese Puffervorrichtung dient dabei als regenerativ ausgebildete Stoßdämpfung, in welcher die während des normalen Fahrbetriebs beispielsweise bei einem mehrgliedrigen Fahrzeug zwischen den einzelnen Wagenkästen auftretenden Stoßkräfte absorbiert bzw. gedämpft werden. Bei Überschreiten der Betriebslast des regenerativ ausgebildeten und in der Puffervorrichtung integrierten Dämpfungselements (regenerativ ausgebildeten Energieverzehrelements) hingegen spricht die der Puffervorrichtung nachgeschaltete Stoßsicherung an, wobei durch eine definierte plastische Verformung des in der Stoßsicherung vorgesehenen Verformungsrohres die Stoßenergie in Verformungsarbeit und Wärme umgewandelt wird. Somit kann das regenerativ ausgebildete Dämpfungselement (Federapparat) sowie die übrigen Bauteile der Stoßsicherung wirkungsvoll vor Zerstörung oder Beschädigung in einem Crashfall geschützt werden.

Mit der erfindungsgemäßen Lösung ist dabei nach Ansprechen der Stoßsicherung nur das plastisch verformte Verformungsrohr als einzelnes Bauelement auszutauschen.

Als Purrervorrichtung kommt ein Aufbau in Frage, wie er beispielsweise in der Druckschrift EP 1 247 716 D1 beschrieben wird. Besonders bevorzugt ist dabei, dass die Puffervorrichtung aufgelegt ist, bis zu einer vorab festlegbaren charakteristischen Stoßkraft unter gleichzeitiger Längsverschiebung des Pufferstempels in Richtung Grundplatte die bei einem auf die Stoßplatte einwirkenden Stoß anfallende Stoßenergie zu absorbieren bzw. abzudämpfen, wobei nach Ausschöpfung des Pufferhubes der Puffervorrichtung der Krafttluss direkt von der Stoßplatte durch das Kraftübertragungselement, das Spannelement, das Verformungsrohr und die Grundpatte läuft.

In einer besonders bevorzugten Ausführungsform der zuletzt genannten Weiterbildung, bei welcher die Stoßsicherung ferner eine in der Stoßsicherung integrierte Puffervorrichtung aufweist, ist vorgesehen, dass die Grundplatte der Stoßsicherung als Flansch ausgeführt ist, welcher an einer Stirnseite eines Wagenkastens vorzugsweise lösbar anbringbar ist. Hierbei handelt es sich also um eine Kombination der erfindungesgemäßen Stoßsicherung mit einer Puffervorrichtung, wobei diese Kombination über die als Flansch ausgeführte Grundplatte an der Stirnseite des Wagenkastens anbringbar ist. Demnach kann die Stoßsicherung mit der darin integrierten Puffervorrichtung als eine als Ganzes austauschbare Baugruppe an dem Tragrahmen oder Untergestell des Wagenkastens angebracht werden. Es handelt sich hierbei also um eine Puffervorrichtung mit Stoßsicherung, die als ein Modul, d.h. als eine als Ganzes austauschbare Funktionsgruppe, ausgebildet ist. Damit ist es möglich, für beispielsweise einen Seitenpuffer als Bauteil zur Kraftübertragung eine zusätzliche Stoßsicherung vorzusehen. Wenn die Stoßsicherung in Kombination mit der Puffervorrichtung zum Einsatz kommt, dient die Puffervorrichtung somit als regenerativ ausgebildete Stoßdämpfung, in welcher die während des normalen Fahrbetriebs beispielsweise bei einem mehrgliedrigen Fahrzeug zwischen den einzelnen Wagenkasten auftretenden Stoßkräfte absorbiert bzw. gedämpft werden. Bei Überschreiten der Betriebslast des regenerativ ausgebildeten und in der Puffervorrichtung integrierten Dämpfungselements hingegen spricht das dem Dämpfungselement nachgeschaltete Verformungsrohr der Stoßsicherung an, wodurch durch eine definierte, plastische Verformung des Verformungsrohres die Stoßenergie in Verformungsarbeit und Wärme umgewandelt wird.

Vorstehend wurde eine besondere Ausführungsform beschrieben, bei welcher die Stoßsicherung ferner eine in der Stoßsicherung integrierte Puffervorrichtung aufweist, wobei die Stoßsicherung über die als Flansch ausgeführte Grundplatte an der Stirnseite des Wagenkastens vorzugsweise lösbar anbringbar ist. Im Rahmen der vorliegenden Erfindung ist es selbstverständlich aber auch denkbar, dass die Stoßsicherung nicht mit einer zusätzlichen Puffervorrichtung versehen ist. So ist es beispielsweise grundsätzlich denkbar, dass das Kraftübertragungselement der Stoßsicherung an seiner der Grundplatte gegenüberliegenden Seite eine Stoßplatte aufweist, über welche Stoßkräfte direkt von der Stoßplatte in das Kraftübcrtragungselement und somit in die Stoßsicherung einleitbar sind. Diese Grundplatte der Stoßsicherung kann als Flunsch ausgeführt sein, der an die Stirnseite des Wagenkastens vorzugsweise lösbar anbringbar ist. Bei dieser Ausführungsform handelt es sich somit um eine zusätzliche (reine) Stoßsicherung, welche keine Dämfungseigenschaft aufweist und vorzugsweise nachträglich an der Stirnseite eines Wagenkastens anbringbar ist.

In einer anderen bevorzugten Realisierung ist die Stoßsicherung derart in einem vor der Stirnseite des Wagenkastens verlaufenden Querträger integriert, dass der Tragrahmen in einer in dem Querträger vorgesehenen Aussparung zumindest teilweise aufgenommen ist. Dieser vor der Stirnseite des Wagenkastens verlaufenden Querträger kann beispielsweise ein Stoßbügel sein, wie er in der Druckschrift DE 10 126 483 A1 beschrieben wird. Die Stoßsicherung dient dabei als seitliche Verbindungselemente des Stoßträgers mit der Tragstruktur des Wagenkastens. Die Stoßsicherung kann, wenn diese die zuvor erwähnte Puffervorrichtung in integraler Weise aufweist, dabei auch Dämpfungseigenschaften haben.

In einer bevorzugten Ausführungsform der zuletzt genannten Realisierung, bei welcher die Stoßsicherung in einem vor der Stirnseite des Wagenkastens verlaufenden Querträger integriert ist, ist vorgesehen, dass die Grundplatte und/oder der Tragrahmen als integraler Bestandteil des Querträgers ausgebildet sind bzw. ist. Dabei sollte das Kraftübertragungselement vorzugsweise über einen Flansch mit seiner der Grundplatte gegenüberliegenden Seite mit einer Tragstruktur des Wagenkastens verbunden sein.

Selbstverständlich ist es aber auch denkbar, dass der vor der Stirnseite des Wagenkastens verlaufende Querträger nicht als Stoßbügel im Sinne der DE 10 126 483 A1, sondern als Tragstruktur ausgebildet ist. An der der Stoßsicherung gegenüberliegenden Seite dieser Tragstruktur kann beispielsweise eine Mittelpufferkupplung etc. angeordnet sein.

Nachfolgend werden Ausführungsformen der erfindungsgemäßen Stoßsicherung anhand der beigefügten Zeichnungen näher beschrieben.

Es zeigen:
- Fig. 1:: eine perspektivische Ansicht einer Stoßsicherung gemäß einer ersten Ausführungsform der Erfindung, wobei die Stoßsicherung keine Dämpfungs- funktionen aufweist und als modulares Bauteil an der Stirnseite einer Tragstruktur anbringbar ist;
- Fig. 2:: die Stoßsicherung gemäß Fig. 1 in einer Seitenschnittansicht;
- Fig. 3:: eine Stoßsicherung gemäß einer zweiten Ausführungsform der Erfindung, wobei die Stoßsicherung eine Dämpfungsfunktion aufweist und als modulares Bauteil an der Stirnseite einer Tragstruktur anbringbar ist;
- Fig. 4:: die Stoßsicherung gemäß Fig. 3 in einer Seitenschnittansicht;
- Fig. 5:: eine Detailansicht des in der Stoßsicherung gemäß der ersten und zweiten Ausführungsform zum Einsatz kommenden Verformungsrohres in einer geschnittenen Darstellung;
- Fig. 6:: eine Stoßsicherung gemäß einer dritten Ausführungsform der Erfindung in einer ersten dreidimensionalen Seitenansicht;
- Fig. 7:: die in Fig. 6 dargestellte Stoßsicherung in einer dreidimensionalen Seitenansicht auf die Grundplatte;
- Fig. 8:: die Stoßsicherung gemäß Fig. 6 oder Fig. 7 in einer Seitenschnittansicht;
- Fig. 9:: eine Stoßsicherung gemäß einer vierten Ausführungsform der Erfindung in einer ersten dreidimensionalen Seitenansicht;
- Fig. 10:: die Stoßsicherung gemäß Fig. 9 in einer zweiten dreidimensionalen Ansicht;
- Fig. 11:: die Stoßsicherung gemäß Fig. 9 oder Fig. 10, welche in einem beispielsweise vor der Stirnseite einer Tragstruktur verlaufenden Querträger integriert ist;
- Fig. 12:: die in Fig. 11 dargestellte Stoßsicherung in einer Seitenschnittansicht;
- Fig. 13:: eine Stoßsicherung gemäß einer fünften Ausführungsform der Erfindung, wobei die Stol3sicherung keine Dämpfungsfunktion aufweist und in einem vor der Stirnseite einer Tragstruktur verlaufenden Querträger integriert ist;
- Fig. 14:: die Stoßsicherung gemäß Fig. 13 in einer Seitenschnittansicht;
- Fig. 15:: eine Stoßsicherung gemäß einer sechsten Ausführungsform der Erfindung in einer Seitenschnittansicht, wobei die Stoßsicherung mit einer Dämpfungsfunktion ausgeführt und in einem vor der Stirnseite einer Tragstruktur verlaufenden Querträger integriert ist;
- Fig. 16:: eine Stoßsicherung gemäß einer siebten Ausführungsform der Erfindung, wobei die Stoßsicherung eine Dampfungsfunktion aufweist und als modulares Bauteil an der Stirnseite einer Tragstruktur anbringbar ist;
- Fig. 17:: die Stoßsicherung gemäß Fig. 16 in einer Seitenschnittansicht; und
- Fig. 18:: eine Detailansicht des in der Stoßsicherung gemäß der siebten Ausführungsform zum Einsatz kommenden Verformungsrohres in einer geschnittenen Darstellung.

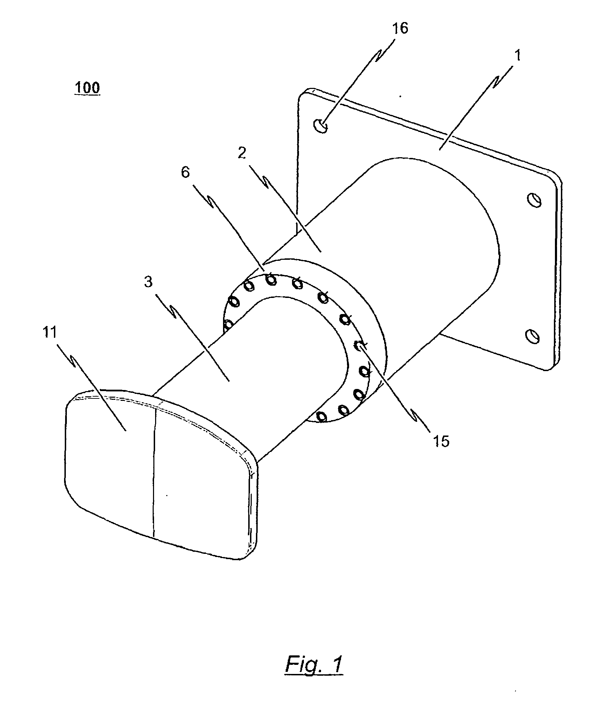

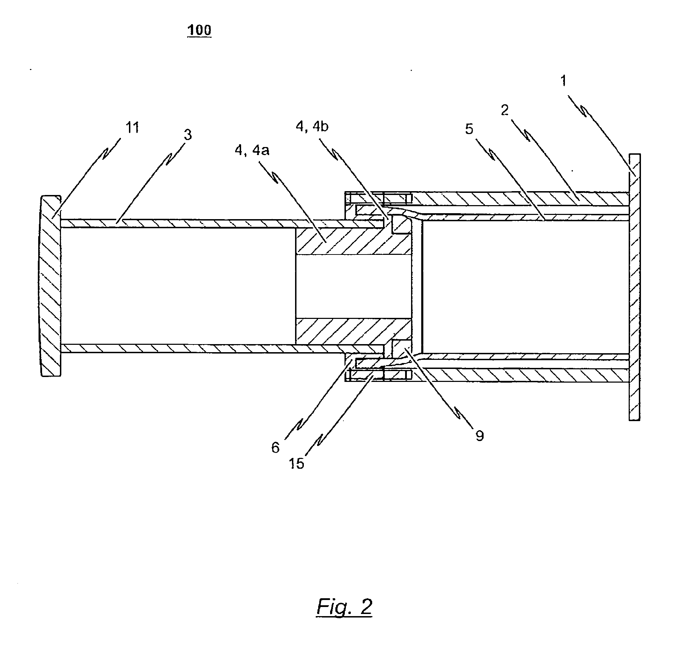

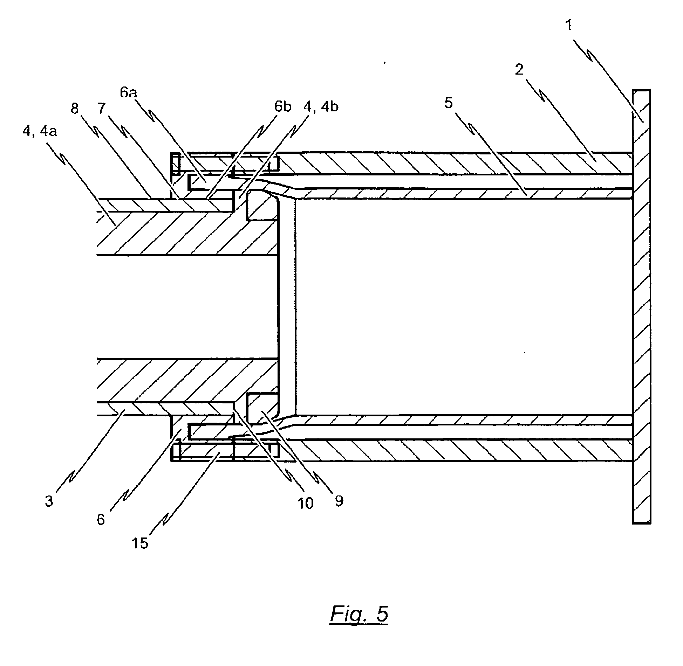

In Fig. 1 ist in einer perspektivischen Ansicht eine erste Ausführungsform der erfindungsgemäßen Stoßsicherung 100 gezeigt, wobei diese Stoßsicherung keine Dämpfungsfunktion aufweist und als modulares Bauteil an der Stirnseite einer (nicht explizit dargestellten) Tragstruktur anbringbar ist. In Fig. 2 ist die Stoßsicherung gemäß der ersten Ausführungsform in einer Seitenschnittansicht dargestellt. Eine Detailansicht des in der Stoßsicherung 100 gemäß der ersten (und zweiten) Ausführungsform zum Einsatz kommenden Verformungsrohres ist in einer geschnittenen Darstellung in Fig. 5 gezeigt.

Die Stoßsicherung 100 gemäß der ersten bevorzugten Ausführungsform eignet sich als irreversible Stoßsicherungsstufe, die zusätzlich zu gegebenenfalls bereits vorhandenen Dämpfungselementen (wie beispielsweise Seitenpuffer) oder Energieverzehreinheiten als eine als Ganzes austauschbare Baugruppe an einem Tragrahmen oder an dem Untergestell beispielsweise eines Wagenkastens anbringbar ist. Hierzu weist die Stoßsicherung 100 gemäß der ersten Ausführungsform eine als Flansch ausgebildete Grundplatte 1 auf, die beispielsweise mit Schrauben an der (nicht explizit dargestellten) Tragstruktur anbringbar ist. In der Grundplatte 1 sind dabei vorzugsweise Durchgangslöcher 16 vorgesehen, durch welche die zum Befestigen der Stoßsicherung 100 verwendeten Schrauben geführt werden können.

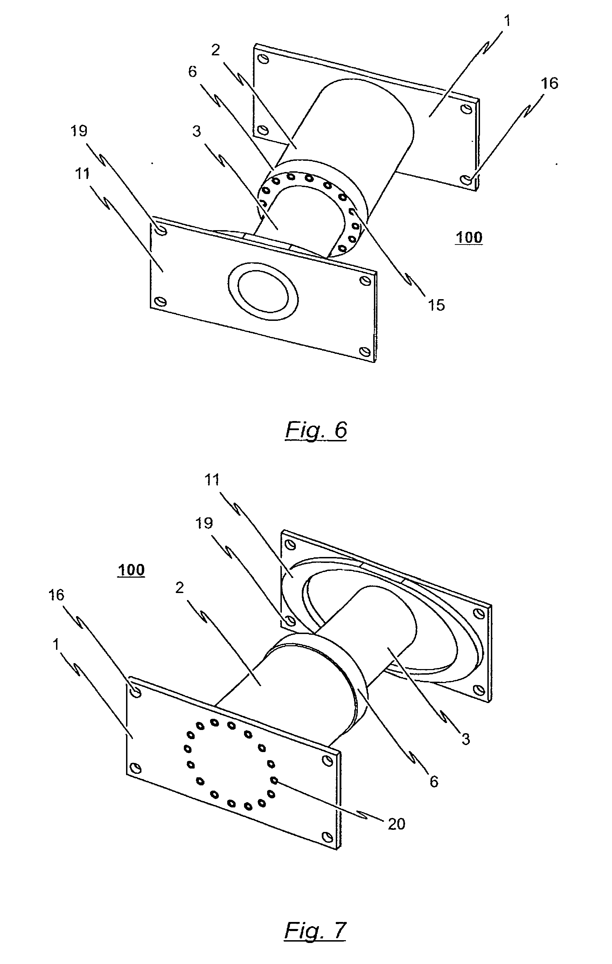

Die Stoßsicherung 100 gemäß der ersten Ausführungsform besteht aus einem Tragrahmen 2, welcher mit der Grundplatte 1 fest verbunden ist. In einzelnen ist der Tragrahmen 2 bei der dargestellten Ausführungsform als ein im Querschnitt kreisrunder Rohrabschnitt ausgeführt. Im inneren des Tragrahmens 2 ist ein Verformungsrohr 5 angeordnet. Das Verformungsrohr 5 stößt dabei mit seinem der Tragstruktur zugewandten Ende an der Grundplatte 1 an und wird dort über eine beispielsweise in Fig. 7 angedeutete Nut 18 fixiert.

Die Stoßsicherung 100 weist des Weiteren ein Kraftübertragungselement 3 in Gestalt eines rohrförmigen Körpers auf, wobei an dem der Grundplatte 1 entgegengesetzten Ende des Kraftübertragungselements 3 eine Stoßplatte 11 befestigt ist. Das grundplattenseitige Ende des Kraftübertragungselementes 3 ist mit einem Spannelement 4 fest verbunden.

Bei den dargestellten Ausführungsformen handelt es sich bei dem Spinnelement 4 um ein im Hinblick- auf das Kraftübertragungselement 3 separat ausgeführtes Bauteil, welches einen Spannelementkörper 4a und eine an dem Spannelementkörper 4a angeformte Stufe 4b aufweist. Der Spannelementkörper 4a ragt zumindest teilweise in das Innere des der Grundplatte 1 zugewandten Kraftübertragungselementes 3 hinein, während die Stufe 4b des Spannelementes über die Stirnseite des der Grundplatte 1 zugewandten Endes des Kraftübertragungselementes 3 hinausragt. Die zwischen dem Kraftübertragungselement 3 und dem Spannelement 4 geforderte feste Verbindung ist vorzugsweise über eine stoffschlüssige Verbindung zwischen dem Spannelementkörper 4a und der Innenseite des Kraftübertragungselements 3 gebildet.

Das Kraftübertragungselement 3 mit dem am grundplattenseitigen Ende fest Verbundenen Spannelement 4 wird über ein Verbindungselement 6 an dem Tragrahmen 2 der Stoßsicherung 100 gehalten. Hierzu weist das Verbindungselement 6 eine Anschlagfläche 10 (vgl. Fig. 5) auf, an welcher die der Grundplatte 1 entgegengesetzte Seite der am Spannelementkörper 4a ausgebildeten Stufe 4b stößt.

Andererseits wird von dem Spannelement 4 ein Kegelring 9 aufgenommen, wobei dieser Kegelring 9 dazu dient, das Verformungsrohr 5 zwischen der Grundplatte 1 und dem Kraftübertragungselement 3 mit dem am grundplattenseitigen Ende vorgesehenen Spannelement 4 zu verspannen. Obwohl in den Zeichnungen das Spannelement 4, der Regelring 9 und das Kraftübertragungselement 3 jeweils als separat ausgeführte Bauteile gezeigt sind, ist es selbstverständlich auch denkbar, dass diese Elemente (Spannelement 4, Kegelring 9, Kraftübertragungselement 3) oder zumindest ein Teil dieser Elemente einstückig ausgebildet sind bzw. ist.

Wie es insbesondere der Fig. 5 zu entnehmen ist, welche eine Detailansicht der in Fig. 2 dargestellten Stoßsicherung 100 zeigt, ist das der Grundplatte 1 entgegengesetzte Ende des Verformungsrohres 5 in einer in dem Verbindungselement 6 ausgebildeten Nut 6a aufgenommen. Das Verbindungselement 6 selber ist über eine Schraubverbindung 15 mit dem Tragrahmen 2 lösbar verbunden. In dem dargestellten, verbundenen Zustand des Verbindungselementes 6 drückt die Anschlagfläche 10 des Verbindungselementes 6 gegen die Stufe 4b des Spannelementes 4, wobei diese Druckkraft (Vorspannung) über den Kegelring 9 auf das dem Kraftüberiragungselement 3 zugewandte Ende des Vertormungsrohres 5 übertragen wird.

Das dem Kraftübertragungselement 3 zugewandte Ende des Verformungsrohres 5 weist einen im Vergleich zu einem weiter in Richtung Grundplatte liegenden Abschnitt aufgeweiteten Querschnitt auf. In diesen aufgeweiteten Abschnitt des Verformungsrohres 5 ragt der Kegelring 9 zusammen mit der am Spannelement 4 ausgebildeten Stufe 4b zumindest teilweise hinein, so dass der Kegelring 9 an der Innenoberfläche dieses aufgeweiteten Verformungsrohrabschnittes anliegt. Wie bereits angedeutet, übernimmt somit der Kegelring 9 eine Führungsfunktion für die beim Ansprechen der Stoßsicherung 100 bewirkte Längsverschiebung des Kraftübertragungselements 3 in Richtung der Grundplatte 1.

Eine weitere Führungsfunktion kommt der am Verbindungselement 6 vorgesehenen Führungstläche 7 zu, die an der Außenfläche 8 des Kraftübertragungselements 3 anliegt.

Die in Fig. 1 und 2 dargestellte Ausführungsform der erfindungsgemäßen Stoßsicherung 100 dient bei einem Crashfall zur plastischen Energieaufnahme, wobei diese Energieaufnahme mit konstantem Kraftniveau erfolgt. Die Ansprechkraft und das Kraftniveau können durch den Grad der Vorverformung des Verformungsrohres 5 an seinem der Grundplatte 1 entgegengesetzten Ende und die Wandstärke des Verformungsrohres 5 eingestellt werden. Wenn in einem Crashfall, d.h. nach Überschreiten der bei einer Stoßkraftübertragung für das Verformungsrohr 5 charakteristischen Ansprechkraft, läuft das Kraftübertragungselement 3 mit dem an seinem grundplattenseitigen Ende vorgesehenen Spannelement 4 und dem Kegelring 9 in das Verformungsrohr 5 hinein, wodurch das Verformungsrohr 5 unter Querschnittserweiterung plastisch deformiert wird. Der mit der Stoßsicherung 100 erzielbare Energieverzehr ist ausgeschöpft, wenn das Kraftübertragungselement 3 mit dem am grundplattenseitigen Ende angeordneten Spannelement 4 und dem Kegelring 9 an der Grundplatte 1 anstößt.

Nach einem Crashfall muss bei der erfindungsgemäßen Lösung lediglich das plastisch deformierte Verformungsrohr 5 ausgewechselt werden, während der Rest der Stoßsicherung 100 wieder verwendet werden kann. Um das Auswechseln des Verformungsrohres 5 zu erleichtern, ist vorzugsweise das Verbindungselement 6 über eine Schraubverbindung 15 mit dem Tragrahmen 2 verbunden.

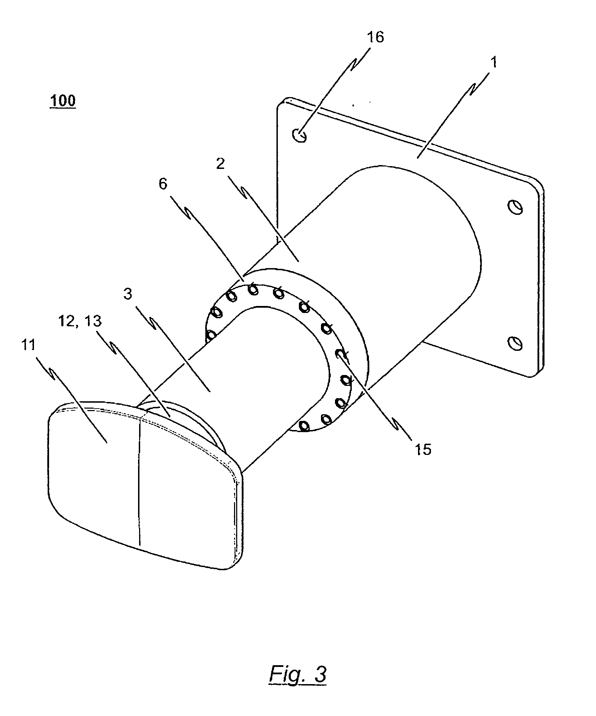

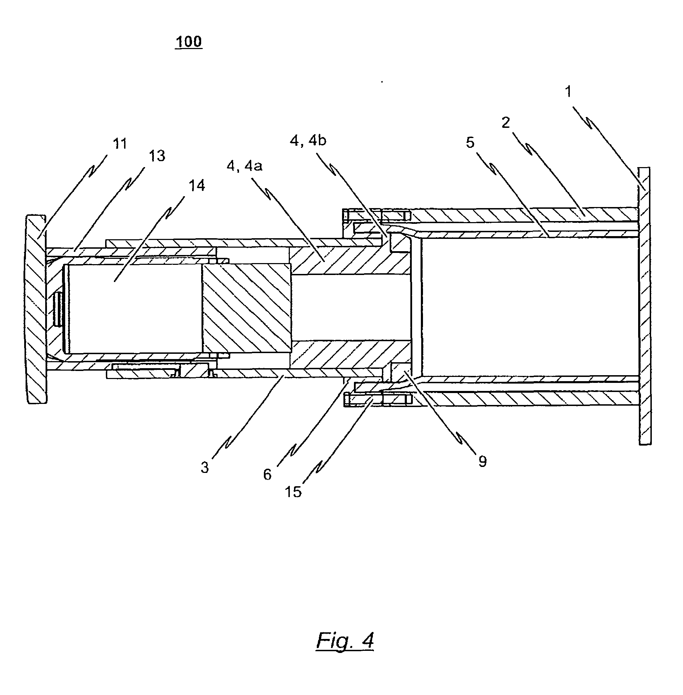

Fig. 3 zeigt eine zweite Ausführungsform der erfindungsgemäßen Stoßsicherung 100 in einer perspektivischen Ansicht, In Fig. 4 ist eine Seitenschnittdarstellung der in Fig. 3 gezeigten Stoßsicherung 100 dargestellt. Einzelheiten im Hinblick auf das in der Stoßsicherung 100 gemäß der zweiten Ausführungsform zum Einsatz kommende Verformungsrohr 5 sind der Fig. 5 zu entnehmen.

Wie auch die in den Figuren 1 und 2 dargestellte Stoßsicherung eignet sich die Stoßsicherung gemäß Fig. 3 dazu, als eine als Ganze austauschbare Funktionsgruppe an der Stirnseite einer Tragstruktur angebracht zu werden. Im Unterschied zu der zuvor unter Bezugnahme auf die Figuren 1 und 2 beschriebenen ersten Ausführungsform allerdings weist die zweite Ausführungsform, wie es in den Figuren 3 und 4 gezeigt ist, eine zusätzliche Dampfungsfunktion auf. Hierzu ist in dem Kraftübertragungselement 3 eine Puffervorrichtung 12 integriert. Wie in Fig. 4 gezeigt, weist die Puffervorrichtung 12 im Wesentlichen einen Pufferstempel 13 auf, wobei an dem der Grundplatte 1 entgegengesetzten Ende des Pufferstempels 13 die Stoßplatte 11 angeordnet ist. Der Pufferstempel 13 verläuft zumindest teilweise in dem als Hohlkörper ausgeführten Kraftübertragungselement 3 und wird durch die Innenwandung des Kraftübertragungselements 3 in axialer Richtung geführt.

Die Puffervorrichtung 12 kann des Weiteren ein im Inneren des Kraftübertragungselements 3 aufgenommenes, vorzugsweise regenerativ ausgebildetes Energieverzehrelement 14 (z.B. einen Elastomerkörper) aufweisen, welches dazu dient, moderate Stoßkräfte zu absorbieren und somit abzudämpfen. Unter dem Begriff "moderate Stoßkräfte" sind Stoßkräfte zu verstehen, die beispielsweise im normalen Fahrbetrieb auftreten und in die Stoßplatte 11 eingeleitet werden.

Nach Überschreiten der Betriebslast des in Inneren des Kraftübertragungselements 3 aufgenommenen, vorzugsweise regenerativ ausgebildeten Energieverzehrelements 14 der Puffervorrichtung 12 stößt die Stoßplatte 11 gegen das der Grundplatte 1 gegenüberliegende Ende des Kraftübertragungselementes 3 an, infolgedessen der bei einem Stoß auftretende Krafttluss direkt von der Stoßplatte 11 in das Kraftübertragungselement 3 übertragen wird. Im weiteren Verlauf wird der bei einer Stoßkraftübertragung auftretende Kraftfluss somit über das Kraftübertragungselement 3, das Spannelement 4 bzw. die Stufe 4b des Spannelementes 4, das Verformungsrohr 5 und die Grundplatte 1 geführt.

Bis zu einer vorab festlegbaren charakteristischen Stoßkraft stellt das Verformungsrohr 5 eine im Wesentlichen starre Verbindung dar. Nach Überschreiten der für das Verformungsrohr 5 charakteristischen Stoßkraft hingegen verliert das Verformungsrohr 5 seine Kraftübertragungsfunktion, wobei unter gleichzeitiger plastischer Verformung des Verformungsrohres 5 zumindest ein Teil der bei der Stoßkraftübertragung anfallenden Energie in Verformungsarbeit und Wärme umgewandelt und somit abgebaut wird. Durch die plastische Verformung des Verformungsrohres 5 bewegt sich das Kraftübertragungselement 3 relativ zur Grundplatte 1 auf die Grundplatte 1 zu.

Bei der erfindungsgemäßen Stoßsicherung 100 sollte die für das Ansprechen des Verformungsrohres 5 charakteristische Stoßkraft so gewählt werden, dass erst nach Ausschöpfung des Energieverzehrs durch das Energieverzehrelement 14 der Puffervorrichtung 12 eine plastische Verformung des Verformungsrohres 5 auftritt.

Die zweite Ausführungsform der erfindungsgemäßen Stoßsicherung 100 bildet eine als Ganze austauschbare Baugruppe, welche an einer Tragstruktur beispielsweise eines Wagenkastens anbringbar ist. Es handelt sich somit um eine Stoßsicherung, die aufgrund der Integration der Puffervorrichtung 12 auch eine im normalen Fahrbetrieb wirksame Dämpfungseigenschaft aufweist. Die in der Stoßsicherung 100 integrierte Puffervorrichtung 12 kann zum Beispiel als regenerativ ausgebildete Stoßdämpfung dienen, in welcher die während des normalen Fahrbetriebs beispielsweise bei einem mehrgliedrigen Fahrzeug zwischen den einzelnen Wagenkasten auftretenden Stoßkräfte absorbiert bzw. gedämpft werden. Bei Überschreiten der Betriebslast des regenerativ ausgebildeten und in der Stoßsicherung 100 integrierten Dämpfungselements 14 der Puffervorrichtung 12 hingegen spricht die der Puffervorrichtung 12 nachgeschaltete Energieverzehreinheit (Verformungsrohr 5) der Stoßsicherung 100 an, wobei durch eine definierte plastische Verformung des Verformungsrohres 5 die Stoßenergie in Verformungsarbeit und Wärme umgewandelt wird. Somit kann das regenerativ ausgebildete Dämpfungselement 14 der Puffervorrichtung 12 sowie der übrigen Bauteile der Stoßsicherung 100 wirkungsvoll vor Zerstörung oder Beschädigung in einem Crashfall geschützt werden. Vielmehr ist nach dem Ansprechen der Stoßsicherung 100 lediglich das Verformungsrohr 5 auszutauschen.

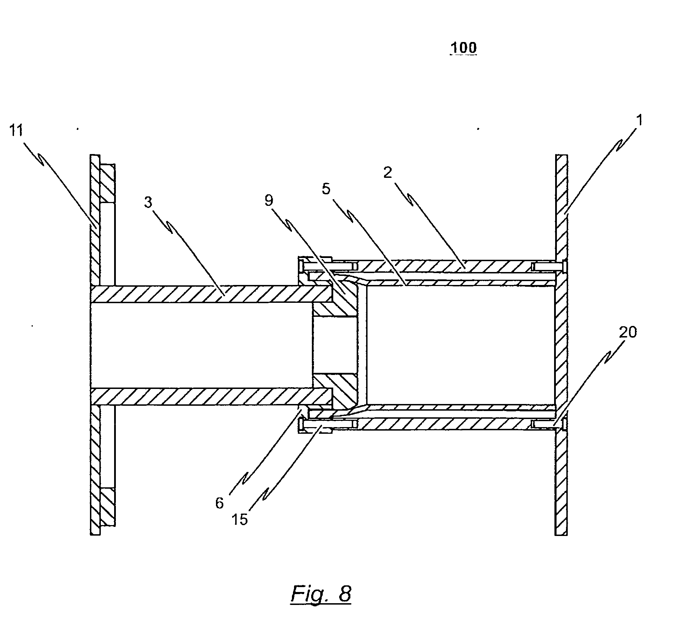

In den Figuren 6 und 7 ist jeweils in einer dreidimensionalen Seitenansicht eine Stoßsicherung 100 gemäß einer dritten Ausführungsform der vorliegenden Erfindung dargestellt. Eine schematische Seitenansicht der Stoßsicherung 100 gemäß der dritten Ausführungsform ist der Darstellung in Fig. 8 zu entnehmen.

Die dritte Ausführungsform der erfindungsgemäßen Stoßsicherung 100 ist in struktureller und funktioneller Hinsicht dem Prinzip nach, mit der ersten Ausführungsform gemäß den Darstellungen in den Figuren 1 und 2 vergleichbar. Kurz zusammengefasst handelt es sich bei der dritten Ausführungsform um eine Stoßsicherung zur plastischen Energieaufnahme in einem Crashfall, wobei ein Verformungsrohr 5 zum Einsatz kommt, welches nach Ansprechen der Stoßsicherung 100 durch plastische Deformation aufgeweitet wird. Im Unterschied zu der unter Bezugnahme auf die Darstellungen gemäß den Figuren 1 und 2 beschriebenen ersten Ausführungsform dient die Stoßsicherung 100 gemäß der dritten Ausführungsform als Kraftübertragungsbauteil, welches beispielsweise zwischen einer in den Figuren 6 bis 8 nicht explizit dargestellten Tragstruktur, etwa einem Hauptrahmen eines Wagenkastens, und einem der Tragstruktur vorgeschalteten Bauteil dient.

Hierzu weist die Stoßsicherung 100 gemäß der dritten Ausführungsform eine Grundplatte 1 auf, über welche die Stoßsicherung 100 an der Tragstruktur lösbar befestigt werden kann. Denkbar hierbei ist es beispielsweise, in der Grundplatte 1 Durchgangslöcher 16 vorzusehen zur Aufnahme von Schrauben, Stiften, Bolzen etc., die letztendlich zum Befestigen der Grundplatte 1 an der Tragstruktur dienen.

Anstelle der Durchgangsbohrungen 16 kommen als Befestigungsmittel aber auch andere Lösungen in Frage. Wenn beispielsweise konstruktionsbedingt die Grundplatte 1 nur mit einem relativ kleinen Randbereich versehen werden kann, in welchem kein hinreichender Platz für geeignete Durchgangsbohrungen 16 gegeben ist, bzw. wenn kein hinreichender Raum für Schrauben, Bolzen etc. vorliegt, die in den Durchgangsbohrungen 16 aufzunehmen sind, bietet es sich an, an der Rückseite der Grundplatte 1, also an der Seite der Grundplatte 1, die dem Tragrahmen 2 abgewandt ist, ein Rohrstutzen oder dergleichen anzuschweißen oder andersartig zu befestigen, wobei letztendlich dieser Rohrstutzen zum Befestigen der Stoßsicherung 100 an der Tragstruktur dient.

Im Unterschied zu der ersten Ausführungsform ist bei der dritten Ausführungsform der vorliegenden Erfindung die Stoßplatte 11 ebenfalls als Grundplatte ausgeführt, an welcher ein der Tragstruktur vorgeschaltetes Bauteil befestigt werden kann. Wie auch die Grundplatte 1 ist es dabei denkbar, dass die als Grundplatte ausgeführte Stoßplatte 11 Durchgangslöcher 19 aufweist, durch welche geeignete Befestigungselemente geführt werden können, um mit Hilfe dieser Befestigungselemente ein der Tragstruktur vorgeschaltetes Bauteil zu befestigen.

Nachfolgend wird unter Bezugnahme auf die in Fig. 8 dargestellte Seitenansicht die Funktionsweise einer gemäß der dritten Ausführungsform ausgeführten Stoßsicherung 100 beschrieben.

Die Stoßsicherung 100 gemäß der dritten Ausführungsform weist die bereits erwähnte Grundplatte 1 sowie die ebenfalls bereits erwähnte Stoßplatte 11 auf, so dass die Stoßsicherung 100 als Bindeglied zum Verbinden der Tragstruktur mit einem vorgeschalteten Bauteil dienen kann. Mit der Grundplatte 1 ist ein Tragrahmen 2 vorzugsweise lösbar befestigt. Bei der in Fig. 8 dargestellten Ausführungsform dienen hierfür geeignete Schraubverbindungen 20. Wie auch bei der ersten Ausführungsform ist der Tragrahmen 2 als ein im Querschnitt kreisrunder Rohrabschnitt ausgeführt. Im Inneren des Tragrahmens 2 ist ein Verformungsrohr 5 angeordnet, welches mit seinem der Tragstruktur zugewandten Ende an der Grundplatte 1 anstößt und dort beispielsweise über eine Nut fixiert wird. Das gegenüberliegende Ende des Verformungsrohres 5 weist einen aufgeweiteten Querschnitt auf, der in einem Spannelement 4 gehalten wird. Bei dem Spannelement 4 handelt es sich um ein Bauteil, welches einen Spannelementkörper 4a und eine an dem Spannelementkörper 4a angeformte Stufe 4b aufweist. Der Spannelementkörper 4a ragt zumindest teilweise in das Innere eines der Grundplatte 1 zugewandten Krattübertragungselements 3 hinein, während die Stufe 4b des Spannelements über die Stirnseite des der Grundplatte 1 zugewandten Endes des Kraftübertragungselements 3 hinausragt. Das Kraftübertragungselement 3 mit dem am grundplattenseitigen Ende fest verbundenen Spannelement 4 wird über ein Verbindungselement 6 an dem Tragrahmen 2 der Stoßsicherung 100 gehalten. Hierzu weist das Verbindungselement 6 eine Anschlagfläche 10 auf, an welcher die der Grundplatte 1 entgegengesetzte Seite der am Spannelementkörper 4a ausgebildete Stufe 4b stößt.

Andererseits wird von dem Spannelement 4 ein Kegelring 9 aufgenommen, wobei dieser Kegelring 9 dazu dient, das Verformungsrohr 5 zwischen der Grundplatte 1 und dem Kraftübertragungselement 3 mit dem am grundplattenseitigen Ende vorgesehenen Spannelement 4 zu verspannen.

Der Aufbau der Stoßsicherung 100 führt dazu, dass bei einer Stoßkraftübertragung zwischen der als Flansch ausgebildeten Stoßplatte 11 und der Grundplatte 1 der Kraftfluss über das Krattübertragungselement 3 zum Verbindungselement 6 läuft, wobei bei dem Verbindungselement 6 der Kraftfluss aufgeteilt wird und ein erster Teil über den Tragrahmen 2 zur Grundplatte 1 läuft, während parallel hierzu ein zweiter Teil über den Kegelring 9 in das Verformungsrohr 5 und von dort zur Grundplatte 1 läuft. Wenn dieser zweite Teil der bei einer Stoßkraftübertragung über das Verformungsrohr 5 geführte Kraft eine vorab festgelegten bzw. festlegbaren Wert überschreitet, tritt eine plastische Deformation des Verformungsrohres 5 unter gleichzeitiger Qmrschnittsaufweitung statt, wobei zumindest ein Teil der von der als Flansch ausgebildeten Stoßplatte 11 zu der Grundplatte 1 übertragenen Energie in Wärme- bzw. Verformungsarbeit umgewandelt und somit abgebaut wird. Beim Ansprechen der Stoßsicherung 100 findet eine Relativbewegung zwischen der Grundplatte 1 und der als Flansch ausgebildeten Stoßplatte 11 statt, wobei sich das Kraftühertragungselement 3 zusammen mit dem Kegelring 9 in das Verformungsrohr 5 bewegen.

Die Ansprechkraft und das Kraftniveau der Stoßsicherung 100 können durch den Grad der Vorverformung und durch die Wandstärke des Verformungsrohres 5 eingestellt werden. Wesentlich ist, dass nach Ansprechen der Stoßsicherung 100 nur das Verformungsrohr 5 ausgewechselt werden muss, während die übrigen Teile der Stoßsicherung 100 wieder verwendet werden können.

Des weiteren soll an dieser Stelle noch die Doppelfunktion hervorgehoben werden, die dass Verbindungselement 6 erfüllt. Zum Einen dient das Verbindungselement 6 - wie bereits dargelegt - dazu, den bereits aufgeweiteten Endbereich des Verformungsrohres 5 aufzunehmen und diesen über den Tragrahmen 2 mit der Grundplatte 1 zu verspannen. Andererseits weist, wie es den Darstellungen gemäß den Figuren 2, 5 und 8 deutlich zu entnehmen ist, dass Verbindungselement 6 eine Führungsfläche 6b auf, an welcher beim Ansprechen der Stoßsicherung 100 die Außenfläche des Kraftübertragungselements 3 und somit die Relativbewegung des Kraftübertragungselements zu dem Verformungsrohr 5 geführt wird.

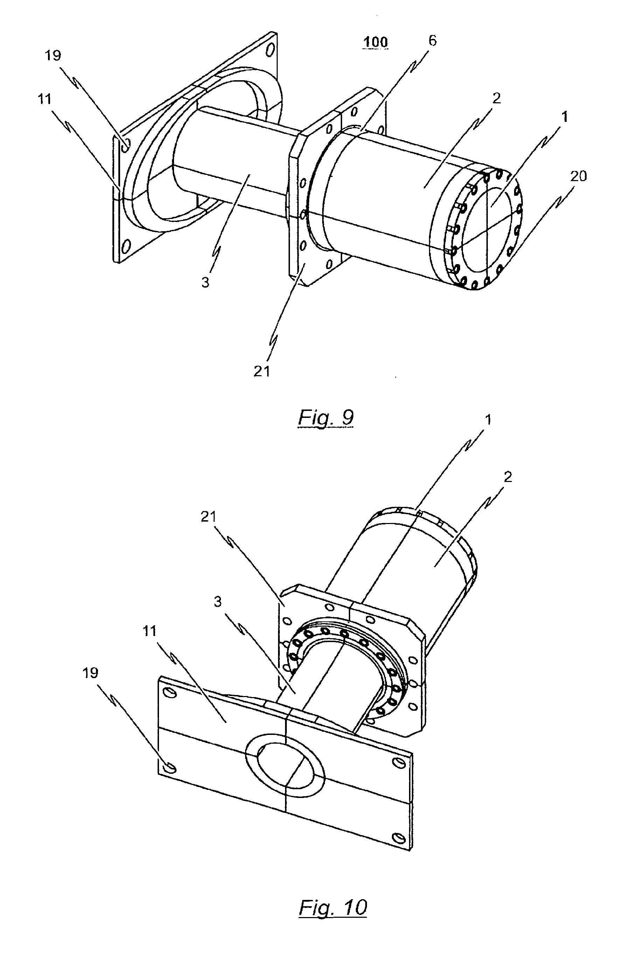

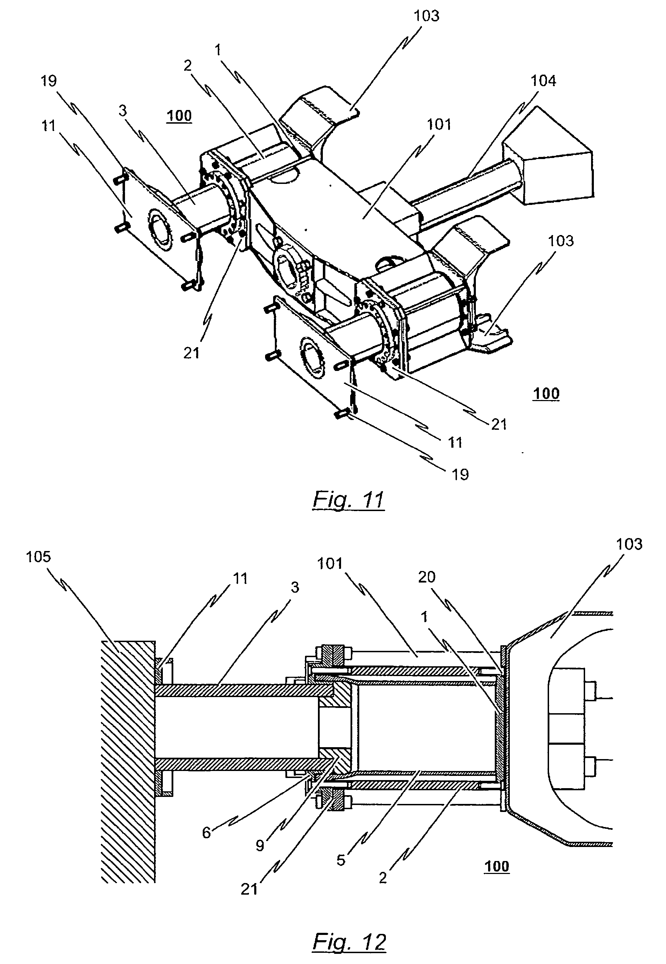

In den Figuren 9 bis 12 ist eine vierte Ausführungsform der erfindungsgemäßen Stoßsicherung 100 dargestellt. Im Einzelnen zeigen die Figuren 9 und 10 die vierte Ausführungsform der Stoßsicherung 100 jeweils in einer dreidimensionalen perspektivischen Ansicht. In Figur 11 ist eine bevorzugte Verwendung der in den Figuren 9 und 10 dargestellten Stoßsicherung 100 gezeigt, während in Fig. 12 eine Seitenschnittansicht der bei der Darstellung in Fig. 11 zum Einsatz kommenden Stoßsicherung 100 gezeigt ist.

Die vierte Ausführungsform der erfindungsgemäßen Stoßsicherung 100 ist in struktureller Hinsicht vergleichbar mit den zuvor beschriebenen Ausführungsformen. Im Unterschied zu beispielsweise der dritten Ausführungsform allerdings, ist die Grundplatte 1, an der der Tragrahmen 2 mit Hilfe von Schrauben 20 verbunden ist, nicht als Flansch ausgebildet, über den die Stoßsicherung 100 an beispielsweise einem Wagenkasten oder an einem vorgeschalteten Bauteil angeschlossen werden kann. Vielmehr ist bei der vierten Ausführungsform am Übergangsbereich zwischen dem Tragrahmen 2 und dem Kraftübertragungselement 3 ein Flansch 21 vorgesehen. Dieser Aufbau gestattet es, dass die Stoßsicherung 100 als Modul verwendet und beispielsweise in einem Querträger (cross beam) 101 integriert werden kann. Dies ist den Darstellungen gemäß Fig. 11 und Fig. 12 zu entnehmen.

Bei der in Fig. 11 gezeigten Ausführungsform kann die als Modul ausgeführte Stoßsicherung 100 über die als Flansch ausgebildete Stoßplatte 11 an der Tragstruktur befestigt werden, während der als kreisrunder Rohrabschnitt ausgeführte Tragrahmen 2 der Stoßsicherung 100 in einem vor der Stirnseite der Tragstruktur verlaufenden Querträger 101 integriert ist. Im Einzelnen wird dabei die Stoßsicherung 100 über den Flansch 21 mit dem Querträger 101 verbunden.

An dem Querträger 101 können - wie es der Darstellung in Fig. 11 entnommen werden kann - bei Bedarf beispielsweise ein Aufkletterschutz 103 sowie eine Kupplung 104 angeordnet sein. Die teilweise in dem Querträger 101 integrierte und beispielsweise als Verbindungselement zum Wagenkasten dienende Stoßsicherung 100 dient zur plastischen Energieaufnahme, mit konstantem Kraftniveau im Crashfall. Dazu wird die Stoßplatte 11 der Stoßsicherung 100 an einem (nicht dargestellten) Wagenkasten befestigt. Im Crashfall wird zunächst Energie reversibel und irreversibel von einer Zug-/Stoßsicherung der am Querträger befestigten (angeschraubten) Kupplung 104 aufgenommen. Danach kommt die Stoßsicherung 100 zum Einsatz. Wie auch die zuvor beschriebenen Ausführungsformen besteht die Stoßsicherung 100 gemäß der vierten Ausführungsform aus der Grundplatte 1, dem Tragrahmen 2, dem Verformungsrohr 5, dem Kraftübertragungselement 3, dem Kegelring 9 mit dem Spannelement 4 und dem Verbindungselement 6. Der mit der Stoßsicherung 100 bewirkbare Energieverzehr wurde bereits unter Bezugnahme auf die Darstellungen in den Figuren 1 bis 8 beschrieben.

Selbstverständlich ist es aber auch denkbar, dass die als Modul ausgeführte Stoßsicherung 100 gemäß der vierten Ausführungsform selber noch eine reversible Stoßdämpfungsfunktion aufweist, wie es bei der Stoßsicherung 100 gemäß der zweiten Ausführungsform der Fall ist.

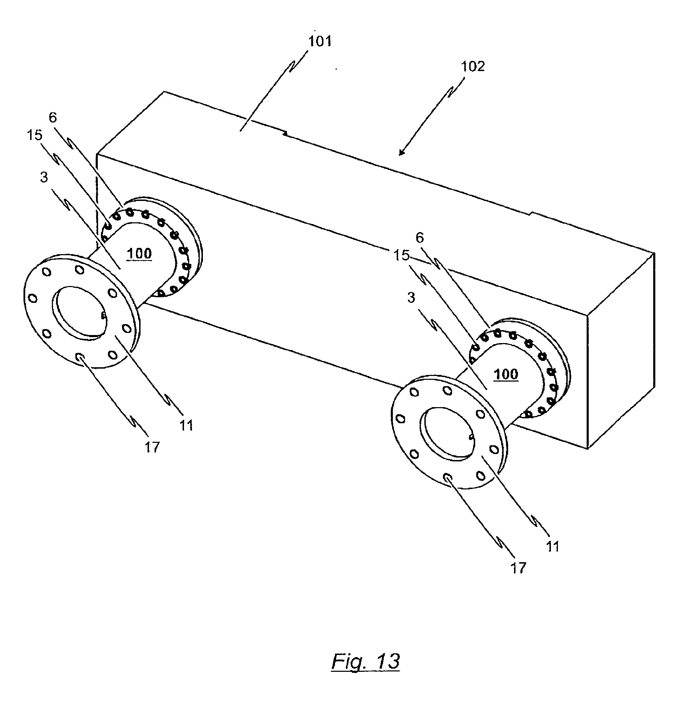

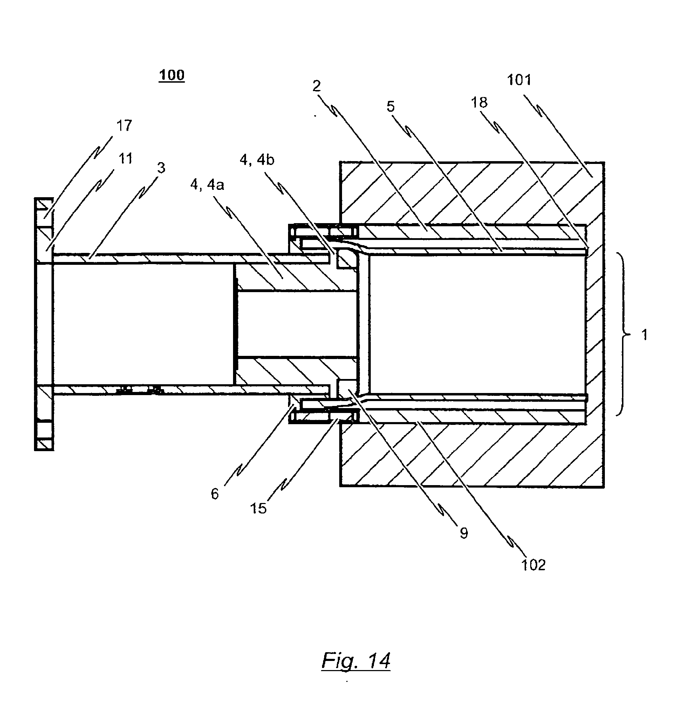

In Fig. 13 ist eine fünfte Ausführungsform der erfindungsgemäßen Stoßsicherung 100 dargestellt. Bei dieser Ausführungsform wird die Stoßsicherung 100 verwendet, um einen quer zur Stirnseite einer (nicht dargestellten) Tragstruktur verlaufenden Träger 101 mit der Stirnseite der Tragstruktur zu verbinden. Im Einzelnen, und wie es insbesondere der Fig. 14 zu entnehmen ist, welche eine Schnittdarstellung einer in Fig. 13 gezeigten Stoßsicherung 100 zeigt, kommt bei der Fünften Ausführungsform im Prinzip eine Stoßsicherung 100 zum Einsatz, wie sie bereits zuvor unter Bezugnahme auf die Figuren 1 und 2 beschrieben wurde.

Im Einzelnen umfasst die Stoßsicherung 100 gemäß Fig. 13 bzw. Fig. 14 ein Kraftübertragungselement 3, an dessen einen Ende eine Stoßplatte 11 angeordnet ist. Diese Stoßplatte 11 dient dazu, die Stoßsicherung 100 mit dem Querträger 101 an einer (nicht explizit dargestellten) Tragstruktur vorzugsweise lösbar zu befestigen. Hierzu sind in der Stoßplatte 11 entsprechende Durchgangsöffnungen 17 vorgesehen, die zur Aufnahme geeigneter Schrauben etc. dienen.

Der Aufbau und die Funktionsweise der Stoßsicherung 100 gemäß Fig. 14 entsprechen im Wesentlichen dem Aufbau und der Funktionsweise der zuvor unter Bezugnahme auf Fig. 2 beschriebenen Stoßsicherung 100. Allerdings ist bei der fünften Ausführungsform die Stoßsicherung 100 teilweise in dem Querträger 101 integriert. Im Einzelnen weist der Querträger 101 eine Aussparung 102 auf, in welcher der Tragrahmen 2 der Stoßsicherung 100 aufgenommen ist. An diesem Tragrahmen 2 ist - wie auch bei der ersten und zweiten Ausführungsform der erfindungsgemäßen Stoßsicherung 100 - das Verbindungselement 6 über eine Schraubverbindung 15 lösbar befestigt.

Bei der fünften Ausführungsform der erfindungsgemäßen Stoßsicherung 100 ist die Grundplatte 1 integral in dem Querträger 101 ausgebildet. In gleicher Weise ist es selbstverständlich denkbar, auch den Tragrahmen 2 als integraler Bestandteil des Querträgers 101 auszuführen.

Mit der Stoßsicherung 100 gemäß der fünften Ausführungsform wird eine Stoßsicherungsstufe bereitgestellt, mit welcher ein quer zur Stirnseite einer Tragstruktur vorgesehener Träger 101 mit der Tragstruktur verbunden werden kann, wobei die Stoßsicherung 100 nach Überschreiten einer vorab festlegbaren Stoßkraft anspricht und die bei der Stoßkraftübertragung anfallende Energie zumindest teilweise in Verformungsarbeit bzw. Wärmeenergie umwandelt und somit abbaut. Nach dem Ansprechen der Stoßsicherung 100 ist es wiederum lediglich erforderlich, das Verformungsrohr 5 auszutauschen, während die übrigen Bauteile der Stoßsicherung 100 wieder verwendet werden können.

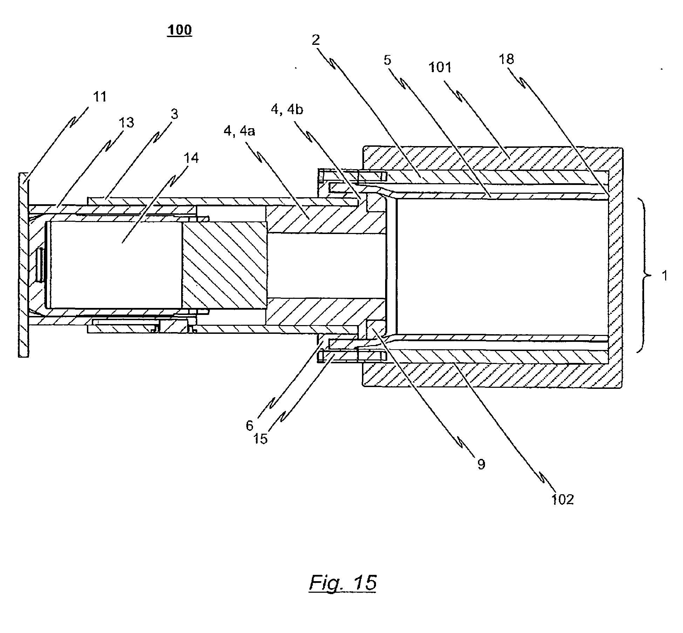

In Fig. 15 ist eine Weiterentwicklung (sechste Ausführungsform) der zuvor unter Bezugnahme auf die Figuren 13 und 14 beschriebenen fünften Ausführungsform der erfindungsgemäßen Stoßsicherung 100 dargestellt. Diese Weiterentwicklung entspricht im Wesentlichen einer Kombination aus der Stoßsicherung gemäß der fünften Ausführungsform (vgl. Figuren 13 und 14) mit der zweite Ausführungsform (vgl. Figuren 3 und 4). Im einzelnen Handelt es sich hierbei um eine Stoßsicherung 100, die zum Befestigen eines Querträgers 101 an der Stirnseite einer (nicht explizit dargestellten) Tragstruktur dient, wobei mit dieser Verbindung nicht nur eine Stoßsicherung, sondern auch eine Stoßdämpfung für moderate Stöße bereitgestellt wird. Dabei ist eine Puffervorrichtung 12 in der Stoßsicherung 100 integriert, wobei der Aufbau und die Funktionsweise dieser Puttervorrichtung im Wesentlichen mit der bereits unter Bezugnahme auf die Figuren 3 und 4 beschriebenen Ausführungsform vergleichbar ist.

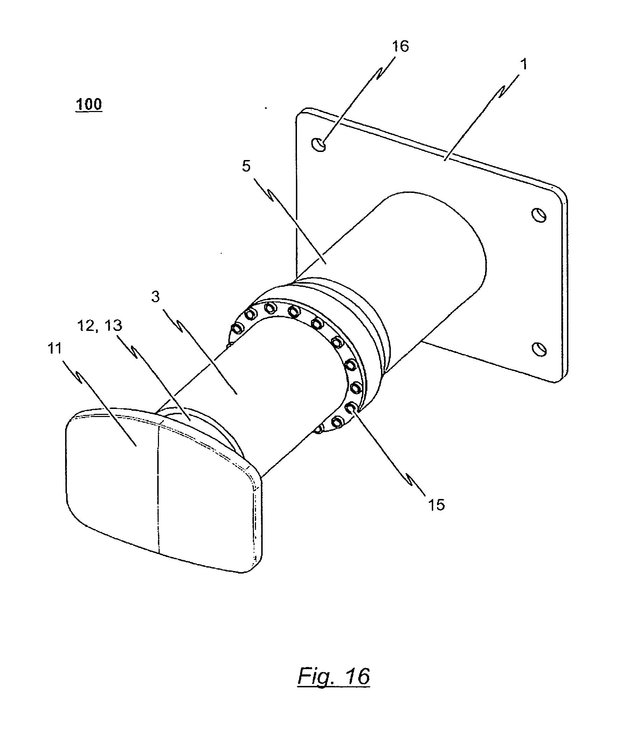

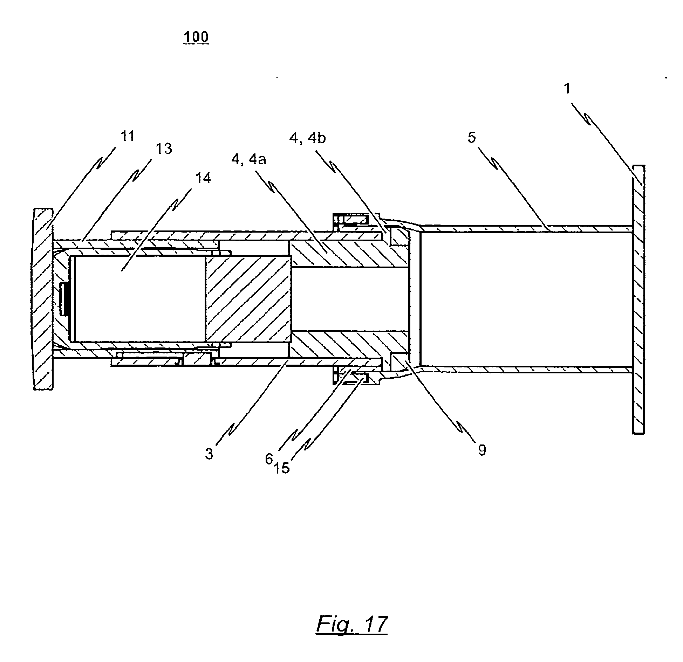

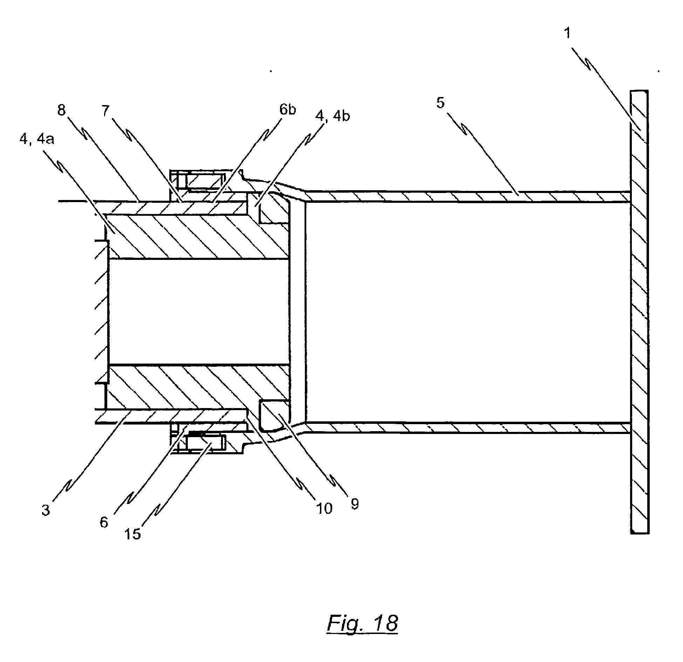

Nachfolgend wird unter Bezugnahme auf die Darstellungen in den Figuren 16, 17 und 18 eine siebte Ausführungsform der erfindungsgemäßen Stoßsicherung 100 beschrieben. Dabei zeigt Fig. 16 die Stoßsicherung 100 gemäß der siebten Ausführungsform in einer perspektivischen Ansicht. In Fig. 17 ist eine Seitenschnittdarstellung der in Fig. 16 gezeigten Stoßsicherung 100 dargestellt. Einzelheiten im Hinblick auf das in der Stoßsicherung 100 gemäß der siebten Ausführungsform zum Einsatz kommende Verformungsrohr 5 sind der Fig. 18 zu entnehmen.

Die Stoßsicherung 100 gemäß der siebten Ausführungsform ist in struktureller und funktioneller Hinsicht dem Prinzip nach mit der zuvor unter Bezugnahme auf die Darstellungen der Figuren 3 bis 5 beschriebenen zweiten Ausführungsform vergleichbar. Wie auch bei der zweiten Ausführungsform (vgl. Figuren 3 bis 5) weist die Stoßsicherung 100 gemäß der siebten Ausführungsform eine zusätzliche Dämptungsfunktion auf, die mit einer in einem Kraftübertragungselement 3 integrierten Puffervorrichtung 12 realisierbar ist. Die Wirkungsweise der Puffervorrichtung 12 wurde bereits im Zusammenhang mit den Ausführungen zur zweiten Ausführungsform erläutert.

Im Unterschied zu der zweiten Ausführungsform ist bei der Stoßsicherung gemäß der siebten Ausführungsform allerdings kein Tragrahmen vorgesehen, in welchem ein Verformungsrohr 5 aufgenommen ist. Vielmehr weist die Stoßsicherung 100 gemäß der siebten Ausführungsform - abgesehen von der bereits erwähnten Puffervorrichtung 12 - lediglich eine Grundplatte 1, ein Verformungsrohr 5, ein Verbindungselement 6, einen Kegelring 9, ein Spannelement 4, ein Kraftübertragungselement 3, in welchem die Puffervorrichtung 12 integriert ist, und Schraubverbindungselemente 15 auf.

Das Verformungsrohr 5 ist über seinen ersten, einer (nicht dargestellten) Tragstruktur zugewandten Endbereich mit der Grundplatte 1 befestigt. Das Verbindungselement 6 ist über die Schraubverbindungselemente 15 mit dem zweiten Endbereich des Verformungsrohrs 5 verbunden und weist eine Führungstläche 6b auf, an welcher beim Ansprechen der Stoßsicherung 100 die Außenfläche des Kraftübertragungsetements 3 und somit die Relativbewegung des Kraftübertragungsetements 3 zu dem Verformungsrohr 5 geführt wird. Das Spannelement 4 dient zur Aufnahme des Kegelringes 9 auf. Durch die Verspannung des Nerbindungselenients 6 über die Schraubverbindungsetemente 15 mit dem Verformungsrohr 5 drückt das Verbindungselcment 6 auf das Spannelement 4. Auf diese weise wird das Spannelement 4 über den Kegelring 9 mit dem Verformungsrohr 5 verspannt. Wie bereits angedeutet, wird beim Ansprechen der Stoßsicherung 100 das Kraftübertragungselement 3 an der Führungsfläche 6b des Verbindungselements 6 geführt und überträgt die Kraft auf das Spannelement 4.

Das Zusammenwirken der einzelnen Bauteile sowie die Funktionsweise der Stoßsicherung sind vergleichbar mit den zuvor beschriebenen Ausführungsformell. Insbesondere lassen sich auch bei der siebten Ausführungsform die Ansprechkraft und das Kraftniveau der Stoßsicherung 100 durch den Grad der Vorverformung und die Wandstärke des Verformungsrohres 5 eingestellt. Nach dem Ansprechen der Stoßsicherung 100 muss erneut nur das Verformungsrohr 5 ggf. mit der Grundplatte 1 ausgewechselt werden. Der Rest der Stoßsicherung 100 kann wiederverwendet werden.

Die Erfindung ist nicht auf die in den Zeichnungen dargestellten Ausführungsformen beschränkt, vielmehr sind auch andere Kombinationen der insgesamt beschriebenen Peinzelmerkmate denkbar.

### Bezugszeichenliste

- 1: Grundplatte
- 2: Tragrahmen
- 3: Kraftübertragungselement
- 4: Spannelement
- 4a: Körper des Spannelements
- 4b: Stufe des Spannelements
- 5: Verformungsrohr
- 6: Verbindungselement
- 6a: Nut des Verbindungselements
- 6b: Führungsfläche
- 7: Führungsfläche des Verbindungselements
- 8: Außenfläche des Kraftübertragungselements
- 9: Kegelring
- 10: Anschlagfläche des Verbindungselements
- 11: Stoßplatte
- 12: Puffervorrichtung
- 13: Pufferstempel
- 14: Energieverzehrelement
- 15: Schraubverbindungselement
- 16: Durchgangsloch
- 17: Durchgangsloch
- 18: Nut
- 19: Durchgangsloch
- 20: Schraubverbindungselement

- 100: Stoßsicherung
- 101: Querträger
- 102: Aussparung im Querträger
- 103: Aufkletterschutz
- 104: Mittelpufferkupplung

## Patentansprüche

1. Stoßsicherung (100), welche folgendes aufweist:
- eine Grundplatte (1);
- ein Kraftübertragungselement (3) mit einem Spannelement (4);
- ein Energieverzehrelement in Gestalt eines Verformungsrohres (5), welches über einen ersten Endbereich mit der Grundplatte (1) verbunden ist; und
- ein Verbindungselement (6) zum lösbaren Verbinden des Kraftübertragungselements (3) mit einem zweiten Endbereich des Verformungsrohrs (5),
wobei das Verbindungselement (6) über eine Schraubverbindung (15) mit einem fest mit der Grundplatte (1) verbundenen Tragrahmen (2) lösbar verbunden ist und gegen das Spannelement (4) drückt, so dass das Verformungsrohr (5) zwischen dem Spannelement (4) und der Grundplatte (1) spielfrei verspannt ist.

2. Stoßsicherung (100) nach Anspruch 1,
welche ausgelegt ist, Stoßkräfte zu übertragen, wobei der bei einer Stoßkraftübertragung auftretende Kraftfluss durch das Kraftübertragungselement (3), das Spannelement (4), das Verformungsrohr (5) und die Grundplatte (1) läuft, wobei das Verformungsrohr (5) ausgelegt ist, bis zu einer vorab festlegbaren charakteristischen Stoßkraft die bei einer Stoßkraftübertragung anfallende Energie zu übertragen, und wobei das Verformungsrohr (5) ferner ausgelegt ist, nach Überschreiten der vorab festlegbaren charakteristischen Stoßkraft unter gleichzeitiger plastischer Verformung zumindest einen Teil der bei der Stoßkraftübertragung anfallenden Energie zu absorbieren und abzubauen, wobei sich bei der plastischen Verformung des Verformungsrohres (5) das Ktaftübertragungsctement (3) und die Grundplatte (1) relativ aufeinander zu bewegen.

3. Stoßsicherung (100) nach Anspruch 1 oder 2,
wobei das Verbindungselement (6) eine Führungsfläche (7) aufweist, welche an der Außenfläche (8) des Kraftübertragungselements (3) unmittelbar angrenzt oder anstößt, und welche ausgelegt ist, nach Ansprechen der Stoßsicherung (100) die durch ein plastisches Verformen des Verformungsrohres (5) bewirkte Bewegung des Kraftübertragungselements (3) relativ zur Grundplatte (1) in axialer Richtung (L) der Stoßsicherung (100) zu führen.

4. Stoßsicherung (100) nach einem der vorhergehenden Ansprüche,
welche ferner einen Kegelring (9) aufweist, der zwischen dem Spannelement (4) und dem Verformungsrohr (5) liegt, so dass das Verformungsrohr (5) über den Kegelring (9) zwischen dem Spannelement (4) und der Grundplatte (1) verspannt ist.

5. Stoßsicherung (100) nach einem der vorhergehenden Ansprüche,
wobei das Spannelement (4) als integraler Bestandteil des Kraftübertragungselements (3) in Gestalt einer an eine der Grundplatten (1) zugewandten Anschlagfläche (10) des Verbindungselements (6) anstoßende Stufe (4b) ausgebildet ist.

6. Stoßsicherung (100) nach einem der Ansprüche 1 bis 4,
wobei das Spannelement (4) einen in dem als Hohlkörper ausgeführten Kraftübertragungselement (3) zumindest teilweise aufgenommenen Körper (4a) aufweist, und wobei an dem Körper (4a) des Spannelements (4) eine an eine der Grundplatte (1) zugewandte Anschlagfläche (10) des Verbindungselements (6) anstoßende Stufe (4b) ausgebildet ist.

7. Stoßsicherung (100) nach einem der vorhergehenden Ansprüche,
wobei das der Grundplatte (1) gegenüberliegende Ende des Verformungsrohres (5) in einer in dem Verbindungselement (6) ausgebildeten Nut (6a) aufgenommen ist.

8. Stoßsicherung (100) nach einem der vorhergehenden Ansprüche,
wobei das Kraftübertragungselement (3) an seiner der Grundplatte (1) gegenüberliegenden Seite eine Stoßplatte (11) aufweist, über welche Stoßkräfte in das Kraftübertragungselement (3) und in die Stoßsicherung (100) einleitbar sind.

9. Stoßsicherung (100) nach Anspruch 8,
wobei die Stoßsicherung (100) ausgelegt ist, Stoß- und Zugkräfte zu übertragen, wobei der bei einer Zugkraftübertragung auftretende Kraftfluss durch die Stoßplatte (11), das Kraftübertragungselement (3), das Spannelement (4), das Verbindungselement (6) und den Tragrahmen (2) läuft, und wobei der bei einer Stoßkraftübertragung auftretende Kraftfluss durch die Stoßplatte (11), das Kraftübertragungselement (3), das Spannelement (4), das Verformungsrohr (5) und die Grundplatte (1) läuft.

10. Stoßsicherung (100) nach einem der vorhergehenden Ansprüche,
wobei eine in der Stoßsicherung (100) integrierte Puffervorrichtung (12) vorgesehen ist, welche folgendes aufweist:
- einen in dem zumindest teilweise als Hohlkörper ausgeführten Kraftübertragungselement (3) geführten Pufferstempel (13) mit einer Stoßplatte (11); und
- ein im Inneren des Kraftübertragungselements (3) aufgenommenes, vorzugsweise regenerativ ausgebildetes Energieverzehrelement (14).

11. Stoßsicherung (100) nach Anspruch 10,
wobei die Puffervorrichtung (12) ausgelegt ist, bis zu einer vorab festlegbaren charakteristischen Stoßkraft unter gleichzeitiger Längsverschiebung des Pufferstempels (13) in Richtung der Grundplatte (1) die bei einem auf die Stoßplatte (11) einwirkenden Stoß anfallende Stoßenergie zu absorbieren bzw. abzudämpfen, wobei nach Ausschöpfung des Energieverzehrs durch das Energieverzehrelement (14) der Puffervorrichtung (12) der Kraftfluss direkt von der Stoßplatte (11) durch das Kraftübertragungselement (3), das Spannelement (4), das Verformungsrohr (5) und die Grundplatte (1) läuft.

12. Stoßsicherung (100) nach einem der vorhergehenden Ansprüche,
welche ferner einen mit der Grundplatte (1) verbundenen Tragrahmen (2) aufweist, wobei das Verformungsrohr in dem Tragrahmen (2) aufgenommen ist, wobei das Verbindungselement (6) ausgelegt ist zum Verbinden des Kraftübettragungselements (3) mit dem Tragrahmen (2) einerseits und mit dem Verformungsrohr (5) andererseits, und wobei das Verbindungselement (6) lösbar mit dem Tragrahmen (2) verbunden ist und in seinem mit dem Tragrahmen (2) verbundenen Zustand gegen das Spannelement (4) drückt, so dass das Verformungsrohr (5) zwischen dem Spannelement (4) und der Grundplatte (1) spielfrei verspannt ist.

13. Stoßsicherung (100) nach einem der vorhergehenden Ansprüche,
wobei die Stoßsicherung (100) derart in einem vor der Stirnseite des Wagenkasten verlaufenden Querträger (101) integriert ist, dass der Tragrahmen (2) in einer in dem Querträger (101) vorgesehenen Aussparung (102) zumindest teilweise aufgenommen ist.

14. Stoßsicherung (100) nach Anspruch 13,
wobei die Grundplatte (1) und/oder der ggf. vorgesehene Tragrahmen (2) als integraler Bestandteil des Querträgers (101) ausgebildet sind/ist.

15. Stoßsicherung (100) nach einem der vorhergehenden Ansprüche,
wobei die Grundplatte (1) als Flansch ausgeführt ist, der mit einer Tragstruktur vorzugsweise lösbar verbindbar ist; und/oder
wobei das Kraftübertragungselement (3) vorzugsweise über einen Flansch (11) mit seiner der Grundplatte (1) gegenüberliegenden Seite mit einer Tragstruktur vorzugsweise lösbar verbindbar ist.

## Claims

1. A shock absorber (100) comprising the following:
- a base plate (1);
- a force-transferring element (3) having a tensioning element (4);
- an energy-absorbing element in the form of a deformation tube (5) connected to the base plate (1) via a first end section; and
- a connecting element (6) for the disengageable connecting of the force-transferring element (3) to a second end section of the deformation tube (5),
wherein the connecting element (6) is disengageably connected to a support frame (2) fixedly coupled to the base plate (1) by means of a screw fitting (15) and pressed against the tensioning element (4) such that the deformation tube (5) is braced between the tensioning element (4) and the base plate (1) without play.

2. The shock absorber (100) according to claim 1,
which is designed to transfer impact forces, wherein a force flow occurring upon a transfer of impact force runs through the force-transferring element (3), the tensioning element (4), the deformation tube (5) and the base plate (1), wherein the deformation tube (5) is designed to transmit energy ensuing from the transfer of impact force up to a predefinable characteristic impact force, and wherein the deformation tube (5) is further designed to absorb and dissipate at least a portion of the energy ensuing from the transfer of impact force by simultaneous plastic deformation upon the predefinable characteristic impact force being exceeded, wherein the force-transferring element (2) and the base plate (1) realize a relative movement toward one another upon the plastic deformation of said deformation tube (5).

3. The shock absorber (100) according to claim 1 or 2,
wherein the connecting element (6) comprises a guide surface (7) which directly adjoins or abuts the outer surface (8) of the force-transferring element (3) and which is designed to guide the movement of the force-transferring element (3) relative the base plate (1) effected by a plastic deformation of the deformation tube (5) after the shock absorber (100) has been activated in an axial direction (L) of the shock absorber (100).

4. The shock absorber (100) according to any one of the preceding claims,
further comprising a conical ring (9) situated between the tensioning element (4) and the deformation tube (5) such that the deformation tube (5) is braced between the tensioning element (4) and the base plate (1) by said conical ring (9).

5. The shock absorber (100) according to any one of the preceding claims,
wherein the tensioning element (4) is configured as an integral component of the force-transferring element (3) in the form of a conterminous stage (4b) on one of the stop surfaces (10) of the connecting element (6) facing the base plate (1).

6. The shock absorber (100) according to any one of claims 1 to 4,
wherein the tensioning element (4) comprises a body (4a) at least partly accommodated in the force-transferring element (3) configured as a hollow body, and wherein a conterminous stage (4b) is configured on one of the stop surfaces (10) of the connecting element (6) facing the base plate on the body (4a) of the tensioning element (6).

7. The shock absorber (100) according to any one of the preceding claims,
wherein an end of the deformation tube (5) opposite the base plate (1) is accommodated in a groove (6a) configured in the connecting element (6).

8. The shock absorber (100) according to any one of the preceding claims,
wherein the force-transferring element (3) comprises an impact plate (11) on its side opposite the base plate (1) by which impact forces can be introduced to the force-transferring element (3) and the shock absorber (100).

9. The shock absorber (100) according to claim 8,
wherein the shock absorber (100) is designed to transfer impact and tractive forces, wherein a force flow occurring upon a transfer of tractive force runs through the impact plate (11), the force-transferring element (3), the tensioning element (4), the connecting element (6) and the support frame (2), and wherein the force flow occurring upon a transfer of impact force runs through the impact plate (11), the force-transferring element (3), the tensioning element (4), the deformation tube (5) and the base plate (1).

10. The shock absorber (100) according to any one of the preceding claims,
wherein an integrated buffer device (12) comprising the following is provided in said shock absorber (100):
- a guided buffer plunger (13) having an impact plate (11) in the force-transferring element (3) at least partially configured as a hollow body; and
- a preferably regeneratively-designed energy-absorbing element (14) accommodated inside said force-transferring element (3).

11. The shock absorber (100) according to claim 10,
wherein the buffer device (12) is designed to absorb or dampen up to a predefinable characteristic impact force of the impact energy resulting from force acting on the impact plate (11) by the simultaneous longitudinal displacement of the buffer plunger (13) toward the base plate (1), wherein after the absorption of energy by the energy-absorbing element (14) of the buffer device (12) has been exhausted, the force flow runs directly from the impact plate (11) through the force-transferring element (3), the tensioning element (4), the deformation tube (5) and the base plate (1).

12. The shock absorber (100) according to any one of the preceding claims,
further comprising a support frame (2) coupled to the base plate (1), wherein the deformation tube is accommodated in the support frame (2), wherein the connecting element (6) is designed to couple the force-transferring element (3) to the support frame (2) on the one side and to the deformation tube (5) on the other, and wherein the connecting element (6) is disengageably coupled to the support frame (2) and pressed against the tensioning element (4) when in its coupled state with the support frame (2) such that the deformation tube (5) is braced between the tensioning element (4) and the base plate (1) without play.

13. The shock absorber (100) according to any one of the preceding claims,
wherein the shock absorber (100) is integrated into a cross member (101) running in front of a front end of a railcar body such that the support frame (2) is at least partly accommodated in a recess (102) provided in said cross member (101).

14. The shock absorber (100) according to claim 13,
wherein the base plate (1) and/or the support frame (2), when provided, is/are configured as an integral component of said cross member (101).

15. The shock absorber (100) according to any one of the preceding claims,
wherein the base plate (1) is configured as a flange which is preferably disengageably connectable to a supporting structure; and/or
wherein the force-transferring element (3) is preferably disengageably connectable to a supporting structure at its side opposite the base plate (1), preferably by means of a flange (11).

## Revendications

1. Protecteur antichoc (100), qui comprend les éléments suivants :
- une plaque de base (1) ;
- un élément transmetteur de force (3) avec un élément de serrage (4) ;
- un élément de dégradation d'énergie sous la conformation d'un tube à déformation (5), lequel est relié via une première zone terminale avec la plaque de base (1) ; et
- un élément de liaison (6) pour la liaison détachable de l'élément transmetteur de force (3) avec une seconde zone terminale du tube à déformation (5),
dans lequel l'élément de liaison (6) est relié de façon détachable via une liaison vissée (15) avec un cadre porteur (2) relié fermement à la plaque de base (1) et presse contre l'élément de serrage (4) de telle façon que le tube à déformation (5) est serré sans jeu entre l'élément de serrage (4) et la plaque de base (1).

2. Protecteur antichoc (100) selon la revendication 1,
lequel est conçu pour transmettre des forces de choc, de sorte que le flux des forces qui apparaît lors de la transmission d'une force de choc passe à travers l'élément de transmission de force (3), l'élément de serrage (4), le tube à déformation (5) et la plaque de base (1), et le tube à déformation (5) est conçu pour transmettre, jusqu'à une force de choc caractéristique préalablement déterminée, l'énergie qui apparaît lors de la transmission d'une force de choc, et dans lequel le tube à déformation (5) est en outre conçu, après dépassement de la force de choc caractéristique préalablement déterminée et sous déformation plastique simultanée, pour absorber et dégrader au moins une partie de l'énergie qui apparaît lors de la transmission d'une force de choc, de sorte que lors de la déformation plastique du tube à déformation (5) l'élément transmetteur de force (3) et la plaque de base (1) se déplacent relativement l'un en direction de l'autre.

3. Protecteur antichoc (100) selon la revendication 1 ou 2,
dans lequel l'élément de liaison (6) comprend une surface de guidage (7) qui est adjacente ou en butée contre la face extérieure (8) de l'élément transmetteur de force (3) et qui est conçue, après réaction du protecteur antichoc (100), pour guider le mouvement, provoqué par une déformation plastique du tube à déformation (5), de l'élément transmetteur de force (3) par rapport à la plaque de base (1) en direction axiale (L) du protecteur antichoc (100).

4. Protecteur antichoc (100) selon l'une des revendications précédentes, qui comprend en outre une bague conique (9) disposée entre l'élément de serrage (4) et le tube à déformation (5), de sorte que le tube à déformation (5) est serré entre l'élément de serrage (4) et la plaque de base (1) via la bague conique (9).

5. Protecteur antichoc (100) selon l'une des revendications précédentes, dans lequel l'élément de serrage (4) est réalisé sous forme d'élément constitutif intégral de l'élément transmetteur de force (3) sous la configuration d'un gradin (4b) en butée contre une surface de butée (10), tournée vers la plaque de base (1), de l'élément de liaison (6).

6. Protecteur antichoc (100) selon l'une des revendications 1 à 4, dans lequel l'élément de serrage (4) comprend un corps (4a) reçu au moins partiellement dans l'élément transmetteur de force (3) réalisé sous forme de corps creux, et dans lequel un gradin (4b), en butée contre une surface de butée (10) tournée vers la plaque de base (1) de l'élément de liaison (6), est réalisé sur le corps (4a) de l'élément de liaison (6).

7. Protecteur antichoc (100) selon l'une des revendications précédentes, dans lequel l'extrémité, opposée à la plaque de base (1), du tube à déformation (5) est reçue dans une gorge (6a) réalisée dans l'élément de liaison (6).

8. Protecteur antichoc (100) selon l'une des revendications précédentes, dans lequel élément de transmission de force (3) présente, sur sa face opposée à la plaque de base (1), une plaque d'impact (11) au moyen de laquelle des forces de choc peuvent être dirigées vers l'élément transmetteur de force (3) et vers le protecteur antichoc (100).

9. Protecteur antichoc (100) selon la revendication 8,
dans lequel le protecteur antichoc (100) est conçu pour transmettre des forces de choc et des forces de traction, de sorte que le flux des forces qui apparaît lors de la transmission d'une force de traction passe à travers la plaque d'impact (11), l'élément transmetteur de force (3), l'élément de serrage (4), l'élément de liaison (6) et le cadre porteur (2), et dans lequel le flux des forces qui apparaît lors de la transmission d'une force de choc passe à travers la plaque d'impact (11), l'élément transmetteur de force (3), l'élément de serrage (4), le tube à déformation (5) et la plaque de base (1).

10. Protecteur antichoc (100) selon l'une des revendications précédentes,
dans lequel est prévu un dispositif tampon (12) intégré dans le protecteur antichoc (100) et comprenant les éléments suivants :
- un poussoir-tampon (13), guidé dans l'élément transmetteur de force (3) réalisé au moins partiellement sous forme de corps creux, avec une plaque d'impact (11) ; et
- un élément de dégradation d'énergie (14), reçu à l'intérieur de l'élément transmetteur de force (3) et réalisé de préférence de manière régénérative.

11. Protecteur antichoc (100) selon la revendication 10,
dans lequel le dispositif tampon (12) est conçu, jusqu'à une force de choc caractéristique préalablement déterminée et sous translation longitudinale simultanée du poussoir-tampon (13) en direction de la plaque de base (1), pour absorber ou amortir l'énergie de choc qui apparaît lors d'un choc agissant sur la plaque d'impact (11), et après épuisement de la dégradation d'énergie par l'élément de dégradation d'énergie (14) du dispositif tampon (12), le flux des forces passe directement de la plaque d'impact (11) à travers l'élément transmetteur de force (3), l'élément de serrage (4), le tube à déformation (5) et la plaque de base (1).

12. Protecteur antichoc (100) selon l'une des revendications précédentes,
lequel comprend en outre un cadre porteur (2) relié à la plaque de base (1), le tube à déformation étant reçu dans le cadre porteur (2), et l'élément de liaison (6) est conçu pour relier l'élément de transmetteur de force (3) avec le cadre porteur (2) d'une part et avec le tube à déformation (5) d'autre part, et dans lequel l'élément de liaison (6) est relié de manière détachable avec le cadre porteur (2) et, dans sa situation reliée avec le cadre porteur (2), il pousse contre l'élément de serrage (4) de sorte que le tube à déformation (5) est serré sans jeu entre l'élément de serrage (4) et la plaque de base (1).

13. Protecteur antichoc (100) selon l'une des revendications précédentes,
dans lequel le protecteur antichoc (100) est intégré dans une traverse (101) s'étendant devant le côté frontal de la caisse de wagon de telle façon que le cadre porteur (2) et reçu au moins partiellement dans un évidement (102) prévu dans la traverse (101).

14. Protecteur antichoc (100) selon la revendication 13,
dans lequel la plaque de base (1) et/ou le cadre porteur (2) éventuellement prévu est/sont réalisé(s) sous forme d'élément constitutif intégral de la traverse (101).

15. Protecteur antichoc (100) selon l'une des revendications précédentes,
dans lequel la plaque de base (1) est réalisée sous forme de bride et est susceptible d'être reliée, de préférence de manière détachable, avec une structure porteuse ; et/ou
dans lequel l'élément transmetteur de force (3) est susceptible d'être relié, de préférence de manière détachable et de préférence via une bride (11), avec une structure porteuse par sa face opposée à la plaque de base (1).
